# EUROPEAN PATENT SPECIFICATION

(11) **EP 2 264 930 B1**
(45) Date of publication and mention of the grant of the patent: **14.05.2014**
(21) Application number: 09290448.1
(22) Date of filing: 15.06.2009
(51) Int. Cl.: H04L 1/00, H04L 1/06, H04B 7/155

(54) **Distributed code generation method and device**
Verteiltes Kodeerzeugungsverfahren und Vorrichtung
Procédé de génération de code distribué et dispositif

(43) Date of publication of application: 22.12.2010
(73) Proprietor: Canon Kabushiki Kaisha, Tokyo (JP)
(72) Inventor: Tannhäuser, Falk, 35000 Rennes (FR); Sevin, Julien, 35140 Saint Aubin du Cormier (FR)
(74) Representative: Petit, Maxime

(56) References cited:
- FRAGOULI C ED - MITLIAGKAS I ET AL: "Network Coding for Dynamically Changing Networks" WIRELESS COMMUNICATIONS AND MOBILE COMPUTING CONFERENCE, 2008. IWCMC '08. INTERNATIONAL, IEEE, PISCATAWAY, NJ, USA, 6 August 2008 (2008-08-06), pages 39-44, XP031306899 ISBN: 978-1-4244-2201-2

## Description

The present invention relates to a distributed code generation method. It applies to telecommunication networks, and in particular to wired or wireless meshed networks based on relay nodes retransmitting messages received from source nodes and sent to a destination node.

A wired or wireless meshed communication network comprises a set S of K source nodes, a set R of N relay nodes with N > K and a destination node. Each message provided by any one of the source nodes is finally received by the destination node. The network topology, determined by the connections between said nodes, is assumed to be known. In case of a wired network, a connection corresponds to a physical wire between two nodes. On the other hand, in case of a wireless network, the presence or absence of a connection between two nodes is a function of the radio signal strength perceived by the receiving node, and hence depends, among others, on the transmission power, transmission and reception antenna characteristics and orientation, the distance, the presence of obstacles or of reflections of radio waves. Each source node is connected to some, but not necessarily to all relay nodes and vice versa. Furthermore, each relay node is connected to the destination node. It is also possible that some source nodes be directly connected to the destination, hence acting as relays for themselves.

The relay nodes are capable of performing so-called "linear network coding" of the data messages received from the source nodes before forwarding the result to the destination node.

Within the scope of the invention, the messages retransmitted by the relay nodes are linear combinations in a suitable Galois Field of the messages received from the source nodes. This technique, called "Network Coding", has been proposed to increase the data rate and to efficiently utilize the network capacity while improving robustness.

Linear network coding consists in considering the data messages to be vectors over a suitable, predetermined Galois Field and calculating linear combinations of said vectors using appropriately chosen scalar coefficients, within each relay node. The destination node receiving said linear combinations can then recover the original data as sent by the source nodes by solving a linear equation system composed of N equations with K unknowns. Note that the solving of this system requires that K≤N. Note also that said system becomes over-determined if K<N. A well-known advantage of network coding, as compared to simple routing, is that it allows a more efficient use of the available network bandwidth for transmitting a given information quantity from the source nodes to the destination node. It should also be noted that, in a meshed network wherein the connectivity between source nodes and relay nodes is not complete, each relay node can only take into account data originating from the source nodes actually connected to it in order to calculate its linear combination. In other words, the scalar coefficient zero has to be applied to data originating from source nodes not connected to a given relay nodes.

During data transmissions in a network, transmission errors may occur in many different circumstances, as for example in case of radio signal fading due to moving obstacles, or electromagnetic interference. Some of these errors lead to data loss which is immediately detectable by the respective data destination, for example through analysing the RSSI ("Received Signal Strength Indication") or the SNR ("Signal to Noise Ratio"). Other errors lead to random alterations of data symbols at unknown positions, which require the use of dedicated techniques to detect them, for example parity bits or CRC ("Cyclic redundancy check"). In the context of the meshed network described above, data losses lead to a reduction in the number of equations in the aforementioned linear equation system that are usable by the destination node, while undetected transmission errors generally render said equation system contradictory. The task of recovering the original data sent by the sources hence becomes difficult.

The patent US 7,380,193 describes a wireless broadcasting network comprising a certain number of source nodes, a certain number of relay nodes - each of them receiving data packets from all source nodes, and a destination node receiving the data from all source nodes as well as from all relay nodes. In order to cope with transmission errors due to fading or signal distortion, this patent proposes that said relay nodes generate parity data for the data received from the source nodes. As an example of said parity data, a Reed-Solomon code is mentioned. However, as stated above, this solution requires a particular, complete connectivity between source nodes, relay nodes and the destination node. Depending on the relative location of said nodes to each other as well as with regard to obstacles masking or reflecting radio waves, attaining such connectivity may not be feasible.

The academic publication of Aditya Ramamoorthy and Andalam Satya Mohan Vamsi (lowa State University) dated October 5, 2007 "EE 520: Topics in Communications: Network Coding; Lecture 11" describes a 2-layered network wherein a source node has to broadcast a certain number of source data symbols to second-layer destination nodes while passing through a certain number of first-layer relay nodes. The goal of these features is to optimally use the network capacity, which cannot be achieved through simple routing. The proposed solution consists in the source node constructing a Reed-Solomon code word from said source data symbols and transmitting one symbol of said code word to each of the layer-1 relay nodes. Each layer-2 destination node is connected to a sufficiently big number of layer-1 relay nodes, allowing it to recover enough of said code symbols to reconstitute the complete code word and hence the original source data symbols. This solution requires again a complete connectivity between the source node and the relay nodes. Furthermore, it places the burden of encoding onto the single source node and it does not address the problem of managing data broadcasts originating from several source nodes.

The academic publication of Shenghao Yang and Raymond W. Yeung (The Chinese University of Hong Kong - Department of Information Engineering): "Characterizations of Network Error Correction/Detection and Erasure Correction", Introduces a theoretical approach to the concept of network Hamming weight depending on connectivity conditions In a meshed network, with the goal of allowing error and erasure correction. However, only the case of a single source node is taken into account, and no method of determining suitable network coding coefficients is described, taught or suggested.

The academic publication Fragouli C Ed - Mitllagkas I et al. "network coding for dynamically changing networks" Wireless communications and mobile computing conference 2008 IWCMC '08' 2008-08-06, pages 39-44 describes methods of network coding for dynamically changing networks..

Accordingly, It would be advantageous to provide a technique/method/system for determining network coding coefficients, as well as the corresponding decoding technique/method/system, not subject to drawbacks and limitations of the known art.

One of the goals of the present invention is to improve the robustness of the data transmission so that even in the presence of a certain amount of data losses or transmission errors, the original data can be recovered. It is desirable that this problem be solved by taking advantage of linear network coding, without considerably impacting the network bandwidth utilisation.

More particularly, one of the aims of the present invention is to address the problem of connectivity between source nodes and relay nodes not being complete.

According to a first aspect, the present invention relates to a method of generating network coding coefficients to be distributed in a network comprising a set of K source nodes and N relay nodes, at least one relay node receiving data packets from a subset of said set of K source nodes, the data packets being composed of symbols from a predetermined Galois Field, characterised in that it comprises the steps of:
- determining network links between the K source nodes and the N relay nodes;
- a step of constructing a generator matrix for a linear error correcting code, a generator matrix, of dimension N*K, with coefficients from said Galois Field, defined such that each row of the generator matrix corresponds to a relay node and each column of the generator matrix corresponds to a source node, and such that at each position in the generator matrix that corresponds to a source node and a relay node between which no link exists said coefficient a zero coefficient, and
- determining the remaining coefficients of the generator matrix so that each said column corresponds to a codeword of said linear error correcting code and the codewords corresponding respectively to the columns are all linearly independent, the coefficients of each said row being suitable for use by the relay node corresponding to the row concerned for linear network coding by linearly combining data packets received from source nodes.

Thanks to these features, the following problem is solved: how to construct a network coding that is able to correct transmission errors and that is adapted to the given mesh network topology, said topology being characterized by the absence of complete connectivity between source nodes and relay nodes.

According to particular features, the step of constructing said generator matrix comprises determining the number K of source nodes, determining the number N of relay nodes, gathering the information on the links existing in the network between the source nodes and the relay nodes and determining if each non-empty subset of the set of K source nodes is connected to at least N-K+c relay nodes, wherein c with 0<c≦K is the cardinality of said subset.

Thanks to these features, a necessary and sufficient condition is given for the existence of a linear network coding with the desired characteristics in function of the connectivity existing between source nodes and relay nodes.

According to particular features, the step of constructing said generator matrix comprises the steps of:
- for each non-empty subset of the set of K source nodes, calculating the difference between the cardinality of the set of relay nodes connected to at least one of the source nodes in said subset and the cardinality of said subset;
- determining the minimum M of said differences and
- determining that a generator matrix exists if M = N-K.

According to particular features, if at least one subset with cardinality c, with 0<c<K, of the set of K source nodes is connected to less than N-K+c relay nodes, during the step of determining said coefficients, the network is virtually augmented by adding at least one imaginary source node considered to be connected to each replay node.

According to particular features, if M<N-K, K is replaced by an adjusted number K_{adj} equal to N-M, the number of imaginary source nodes being K_{adj}-K.

Thanks to these features, a network augmented by K_{adj}-K "imaginary source nodes", where each of said source nodes is considered to be connected to each one of the N relay nodes, will fulfil the necessary and sufficient condition mentioned above (for K_{adj} source nodes and N relay nodes), even if the original network does not (for K source nodes and N relay nodes). Consequently, an error-correcting network coding may be constructed (although with lower redundancy N-K_{adj} < N-K and hence lower error correction capacity) even if the connectivity existing in the network is insufficient for a coding with the full redundancy N-K.

According to particular features, the step of constructing said generator matrix comprises:
- erasing up to h positions of each column of the generator matrix that differ from the positions containing zeros, wherein h is the erasure correcting capacity of the primary error correcting code, h being equal to the minimum Hamming distance of said code minus 1;
- setting values for coefficients corresponding to positions that differ from those positions containing either zeros or erasures, if any: and
- recovering the erased positions by associating to each column a codeword of the linear error correcting code, wherein the predetermined values are chosen so that all the columns of the generator matrix are linearly independent.

Thanks to this features, an efficient implementation for finding the generator matrix is provided.

According to particular features, the error correcting code is a Reed-Solomon code of size N and dimension K.

Thanks to these features, Reed-Solomon codes, well-known and efficient methods and their implementations in hardware and software, may be used for error and erasure correction. It has to be noted that a Reed-Solomon code reaches the upper limit for the minimum Hamming distance and hence has a maximal error correction capacity for given size N and dimension K.

According to particular features, the step of determining said coefficients is performed by one node of the network.

According to particular features, the step of determining said coefficients is performed by the destination node.

According to a second aspect, the present invention relates to a method for communicating data packets over a network comprising a set of K source nodes and N relay nodes, at least one relay node receiving data packets from a subset of said set of K source nodes, the data packets being composed of symbols from a predetermined Galois Field, **characterised in that** it comprises:
- a step of obtaining network coding coefficients generated according to the method of generating of the present invention,
- a step of assigning the coefficients associated to each row of the generator matrix to its corresponding relay node,
- a step of linear network coding by linearly combining, in said relay node, data packets received from source nodes using said coefficients and
- a step of sending the resulting linear combination from said relay node to the destination node.

According to a third aspect, the present invention relates to a method for communicating data packets over a network comprising a set of K source nodes and N relay nodes, at least one relay node receiving data packets from a subset of said set of K source nodes, the data packets being composed of symbols from a predetermined Galois Field, **characterised in that** it comprises:
- a step of obtaining network coding coefficients generated according to the method of generating of the present invention,
- a step of receiving at least one of linear combinations of data packets from source nodes, said linear combination using said remaining coefficients and
- a step of recovering data as sent by the source nodes, by solving a linear equation system composed of the received linear combinations.

According to particular features, a relay node detecting an erroneous or missing data reception from a source node connected to it sends a notification to the destination node, enabling the destination node to mark the missing or erroneous linear combination from said relay node as erasure.

Thank to these features, detected reception errors "propagate down" from relay nodes to the destination node, letting the latter appropriately mark erasures and hence augment its error correction capability. Thus, the detected erroneous or missing data receptions map to erasures in a straightforward manner. It Is a well-known fact that an error-correcting code can correct twice as many erasures (i.e., errors with known positions) as errors with unknown positions. As a matter of fact, when D is the minimum Hamming distance of the code, E is the number of errors and F the number of erasures, correction is successful if 2*E+F ≤ D-1, It has to be noted that the destination node may, by itself, detect a bad or missing data reception from a relay node and thus mark it as erasures.

According to particular features, at least a subset of said nodes uses TDMA ("Time Division Multiple Access").

According to a fourth aspect, the present invention relates to a device for generating network coding coefficients to be distributed in a network comprising a set of K source nodes and N relay nodes, at least one relay node receiving data packets from a subset of said set of K source nodes, the data packets being composed of symbols from a predetermined Galois Field, characterised in that it comprises:
- a means for constructing a generator matrix for a linear error correcting code, a generator matrix, of dimension N*K, with coefficients from said Galois Field, defined such that each row of the generator matrix corresponds to a relay node and each column of the generator matrix corresponds to a source node, and such that at each position in the generator matrix that corresponds to a source node and a relay node between which no link exists said coefficient is the scalar neutral element for addition, denoted "zero", and
- a mean for determining the remaining coefficients of the generator matrix so that each said column corresponds to a codeword of said linear error correcting code and the codewords corresponding respectively to the columns are all linearly independent, the coefficients of each said row being suitable for use by the relay node corresponding to the row concerned for linear network coding by linearly combining data packets received from source nodes.

According to a fifth aspect, the present invention relates to a device for communicating data packets over a network comprising a set of K source nodes and N relay nodes, at least one relay node receiving data packets from a subset of said set of K source nodes, the data packets being composed of symbols from a predetermined Galois Field, characterised in that it comprises:
- a device for generating network coding coefficients of the present invention,
means for determining network links between the K source nodes and the N relay nodes;
- means for receiving at least one of linear combinations of data packets from source nodes, said linear combination using said remaining coefficients and
- means for recovering data as sent by the source nodes, by solving a linear equation system composed of the received linear combinations.

According to a sixth aspect, the present invention concerns a computer program loadable into a computer system, said program containing instructions enabling the implementation of the method of the present invention, as succinctly set forth above, when that program is loaded and executed by a computer system.

According to a seventh aspect, the present invention concerns an information carrier readable by a computer or a microprocessor, storing instructions of a computer program, characterized in that It enables the implementation of the method of the preset invention as succinctly set forth above.

As the advantages, objectives and characteristics of this method for communicating, of these devices, of this computer program and of this information carrier are similar to those of the method, as succinctly set forth above, they are not repeated here.

Other advantages, objectives and features of the present invention will emerge from the following description, given, with an explanatory purpose that is in no way limiting, with respect to the accompanying drawings in which:
- Figure 1a schematically illustrates an example of a meshed network;
- Figure 1b illustrates the network coding matrix equation corresponding to the network of Figure 1a;
- Figure 2a illustrates an example! of a meshed network with special topology;
- Figure 2b illustrates the network coding matrix equation corresponding to the network of Figure 2a;
- Figure 3 illustrates a particular embodiment of a network node's communication module;
- Figure 4a illustrates a structure of TDMA transmission sequence;
- Figure 4b illustrates a structure of a control packet indicating new Network Coding Coefficients;
- Figures 5a and 5b are a representation, in the form of a logogram, of steps of a particular embodiment of a method for constructing the network coding matrix;
- Figure 6a is a representation, in the form of a logogram, of steps of a particular embodiment of a method applied by a relay node for updating coefficients;
- Figure 6b is a representation, in the form of a logogram, of steps of a particular embodiment of a method applied by a relay node for data reception, encoding and retransmission;
- Figure 7a is a representation, in the form of a logogram, of steps of a particular embodiment of a method applied by a destination node for updating coefficients;
- Figure 7b is a representation, in the form of a logogram, of steps of a particular embodiment of a method applied by a destination node for data reception, Read-Solomon decoding and equation solving;
- Figures 8a to 8d show examples of meshed networks with bottleneck that renders the usable redundancy to be less than N-K, with adjustment through increasing K and corresponding tables and
- Figure 9 shows a network with a relay node signalling reception error and a destination accordingly handling erasures.

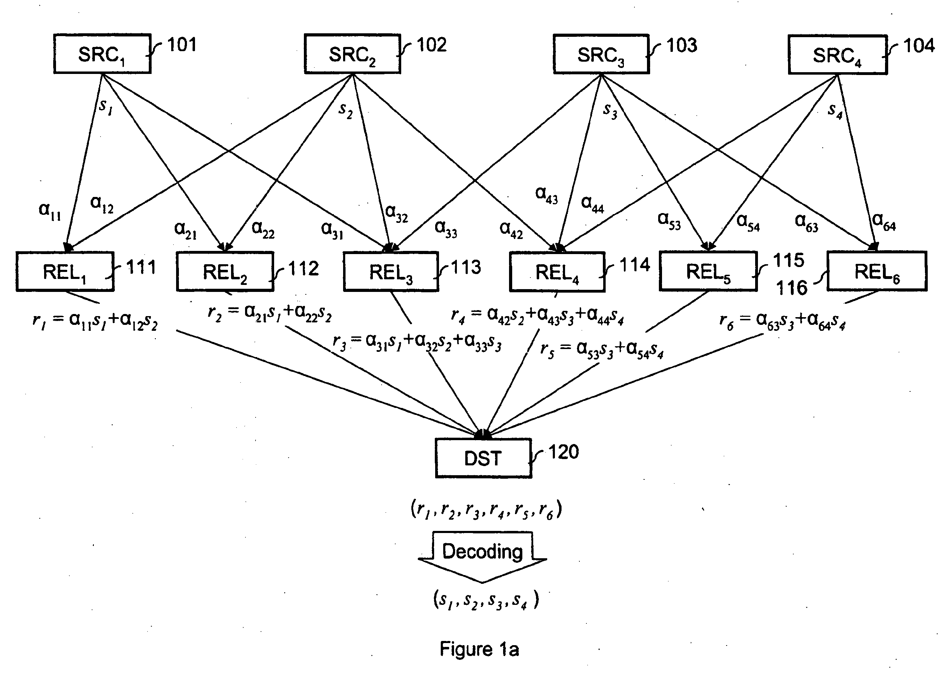

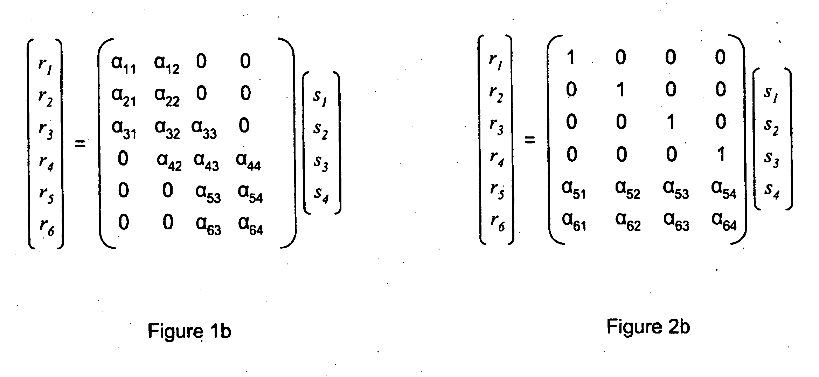

Figure 1 a represents an example of a meshed wireless or wired network applying linear network coding. Consider that each of the data packets transmitted within this network is composed of a predetermined, fixed number L of symbols from a predetermined Galois Field GF(q), q being the number of elements of said Galois Field. Hence said packets can be considered as vectors of the linear space GF(q)^{L}.

It is well known that the number of elements of a Galois Field is always a power of a prime number p (called the characteristic of the Galois Field), q = p^{m} for a positive integer m. Due to the binary nature of the data transmitted in digital networks, said prime number p is usually chosen to be equal to 2. Furthermore, as the devices attached to the networks in question usually structure the binary information they process in the form of bytes composed of 8 bits, m is advantageously chosen to be equal to 8. Hence q = 2⁸ = 256 and the aforementioned data symbols are identical to bytes.

However, it has to be understood that the applicability of the present invention is not restricted to said choices of p and m. Introducing the structure of a Galois Field onto the data symbols composing data packets has the advantage of enabling the arithmetic operations of addition, subtraction, multiplication, division (except by 0) fulfilling well-known properties of commutativity, associativity, inversibility and distributivity. Said operations are useful for the implementation of network coding as well as error correction coding.

Figure 1 a shows four source nodes 101, 102, 103 and 104, also respectively called SRC₁, SRC₂, SRC₃ and SRC₄. Each one of these source node emits a data packet, respectively called s₁, s₂, s₃ and s₄, to all respective connected relay nodes.

Figure 1 a also shows six relay nodes 111, 112, 113, 114, 115 and 116, also respectively called REL₁, REL₂, REL₃, REL₄, REL₅ and REL₆. Each one pf these relay nodes emits a data packet, respectively called r₁, r₂, r₃, r₄, r₅ and r₆, determined from the received packets s₁, s₂, s₃, s₄ through a network coding procedure that will be described below. Both the relay nodes 111 and 112 are connected to the source nodes 101 and 102. Hence relay nodes 111 and 112 each receives the packets s₁ and s₂.

Relay node 113 is connected to the source nodes 101, 102 and 103 and receives packets s₁, s₂ and s₃. Relay node 114 is connected to the source nodes 102, 103 and 104 and receives the packets s₂, s₃ and s₄. Both the relay nodes 115 and 116 are connected to the source nodes 103 and 104. Hence, relay nodes 115 and 116 each receives packets s₃ and s₄.

Each relay node REL¡ (with i = 1, 2, 3, 4, 5, 6) corresponds to a set of 4 so called "network coding coefficients" denoted αᵢⱼ (j = 1, 2, 3, 4) that are scalars or, in other words, elements of the aforementioned Galois Field GF(q), where the coefficient αᵢⱼ is associated to the source node SRCⱼ. Whenever no connection exists from a source node SRCⱼ to a relay node RELi, the corresponding coefficient αᵢⱼ has to be zero. Each relay node RELᵢ, after reception of each of the source packets coming from the source nodes connected to it, calculates the linear combination rᵢ = Σⱼ₌₁⁴ αᵢⱼ sⱼ to determine the data packet rᵢ to be emitted. All data packets are vectors from GF(q)^{L} and addition and scalar multiplication of vectors are component-wise.

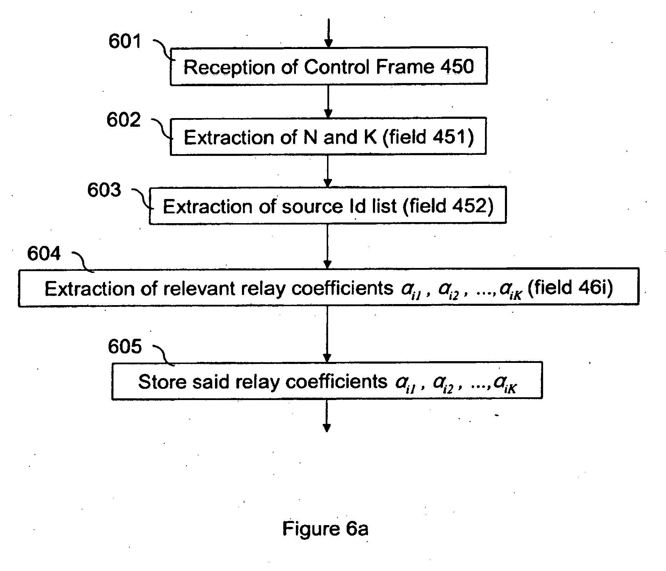

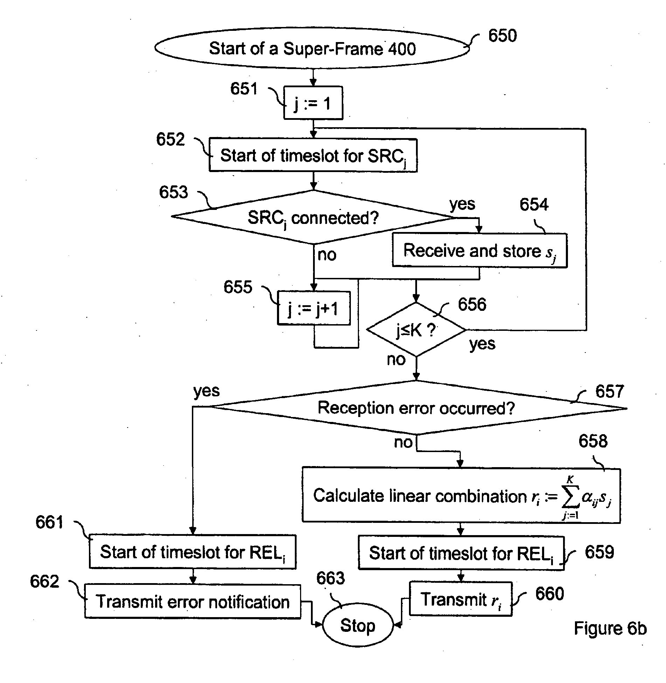

As an example, the relay node 111 (REL₁) calculates the packet r₁ to be emitted as r₁ = α₁₁s₁+α₁₂s₂. Since the source nodes 103 and 104 are not connected to the relay node 111, the coefficients α₁₃ and α₁₄ are equal to zero and the packets s₃ and s₄, not available to said relay node 111, are not taken into account during the calculation. A more detailed implementation example for the operation of relay nodes will be described in relation with Figures 6a and 6b.

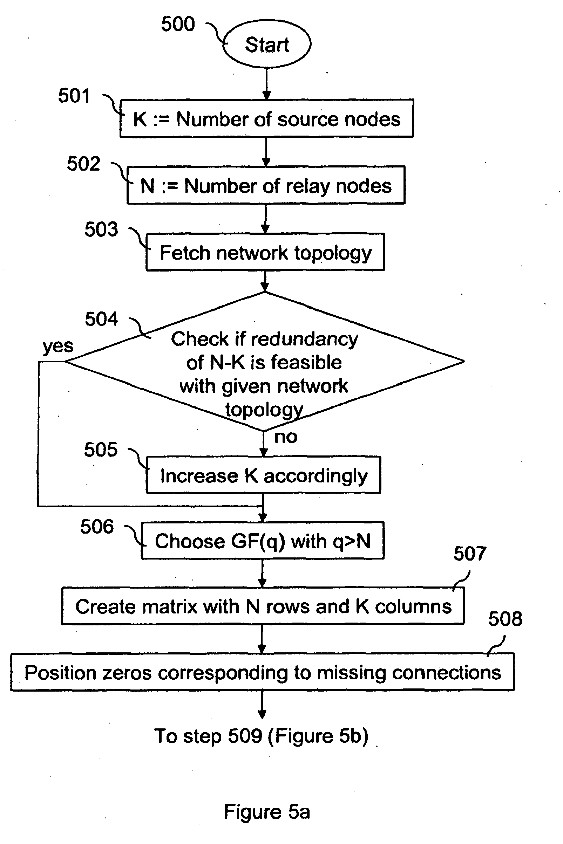

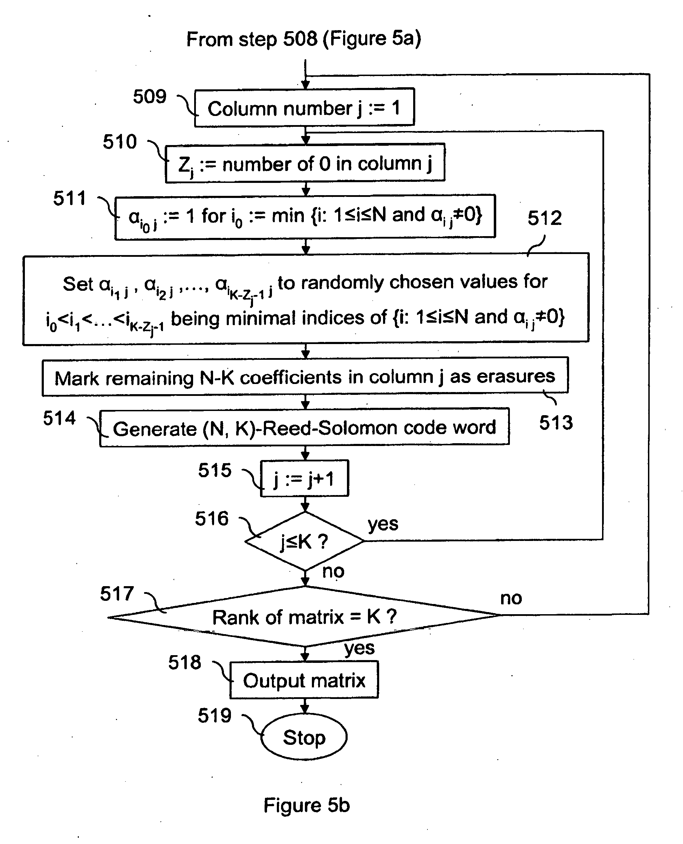

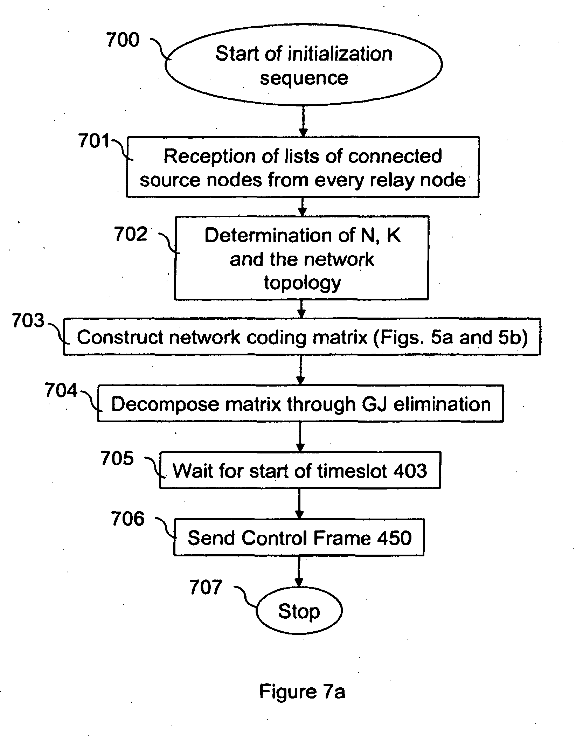

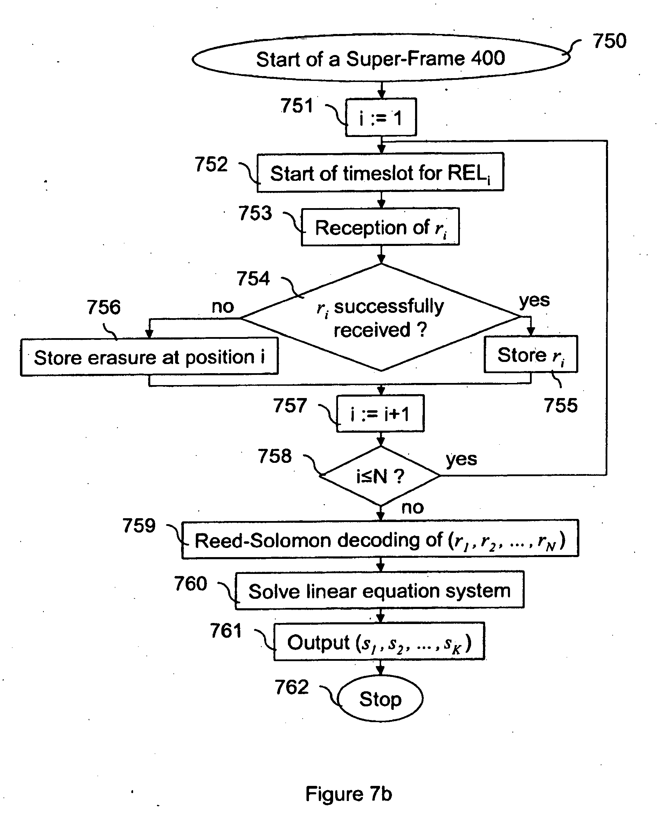

Figure 1 a further shows one destination node 120, also called DST, connected to each of the relay nodes 111, 112, 113, 114, 115, 116 and receiving the (possibly erroneous) data packets r₁, r₂, r₃, r₄, r₅, r₆, where rᵢ = (ρᵢ₁, ρ ᵢ₂, ..., ρ_{iL}) for i = 1,...,6 are vectors of the linear space GF(q)^{L}. As it will be explained more in detail in relation with Figures 5a and 5b, due to the choice of the network coding coefficients αᵢⱼ, each of the symbol strings of the form (ρ₁ₗ. ρ₂ₗ ρ₃ₗ ρ₄ₗ, ρ₅ₗ, ρ₆ₗ) for I = 1, 2, ..., L obtained from said data packets forms a code word of a 4-dimensional linear error correcting code, as for example a (6, 4)-Reed-Solomon code. The destination node 120 corrects possible transmission errors using this error correction code and recovers the original source packets s₁, s₂, s₃, s₄ from the corrected data of the received packets r₁, r₂, r₃, r₄, r₅, r₆ by solving the linear equation system describing the network coding. The operation of destination 120 will be described more in detail in relation with Figures 7a and 7b.

It should be noted that, even if the network connections are considered to be bidirectional for the purpose of transmitting control messages, the principal data flow subject to network coding is directed from source nodes to relay nodes and from relay nodes to the destination node only. We indicate direction of said principal data flow by arrows on figure 1A as well as the remaining figures representing meshed networks.

Figure 1b globally summarises the network coding operation performed by the relay nodes 111, 112, 113, 114, 115, 116 in the form of a matrix equation. The network coding matrix αᵢⱼ) comprises six rows and four columns. Each row corresponds to a relay node (the i^{th} row corresponds to RELᵢ for i = 1, ... , 6). Each column corresponds to a source node (the j^{th} column corresponds to SRCⱼ for j = 1, 2, 3, 4). The network coding coefficients α₁₃, α ₁₄, α₂₃, α₂₄, α₃₄, α₄₁, α₅₁, α₅₂, α₆₁, α₆₂ are equal to 0, since the corresponding connections (from SRC₃ to REL₁, from SRC₄ to REL₁, from SRC₃ to REL₂, etc) do not exist in the network shown in Figure 1 a. Consequently the corresponding respective data packets are not available to the respective relays.

Both the source packets s₁, s₂, s₃ and s₄ and the encoded packets r₁, r₂, r₃, r₄, r₅, r₆ are considered to be row vectors of length L with sⱼ = (σⱼ₁, σⱼ₂, ..., σ _{jL} for j = 1,...,4 and rᵢ = (ρᵢ₁, ρᵢ₂, ..., ρ_{iL} for i = 1, ...,6. Consequently, the 6-by-4 network coding matrix (αᵢⱼ) is multiplied by the 4-by-L matrix (σⱼₗ) composed of the source packets, to obtain the 6-by-L matrix (ρᵢₗ) composed of the encoded packets. Each of the L columns of said 6-by-L matrix (ρᵢₗ) shall be a code word of a predetermined (6, 4)-Reed-Solomon code, which is the case if and only if each of the four columns of the 6-by-4 network coding matrix (αᵢⱼ) is such a code word. This is because the Reed-Solomon code is a linear code, i.e., linear combinations of code words also are code words. Furthermore the matrix multiplication shown in Figure 1b causes the columns of matrix (ρᵢₗ) to be linear combinations of the columns of (αᵢⱼ). Additionally, to allow recovering of the original source data (αⱼᵢ), it is necessary that the rank of the network coding matrix (αᵢⱼ) be equal to four. In other words, the columns of said matrix shall be linearly independent. To summarise, said network coding matrix must be a generator matrix for said Reed-Solomon code. The construction of such a matrix is the object of the logogram of Figures 5a and 5b. Contrarily to the prior art solutions, the encoding will generally not be a systematic one.

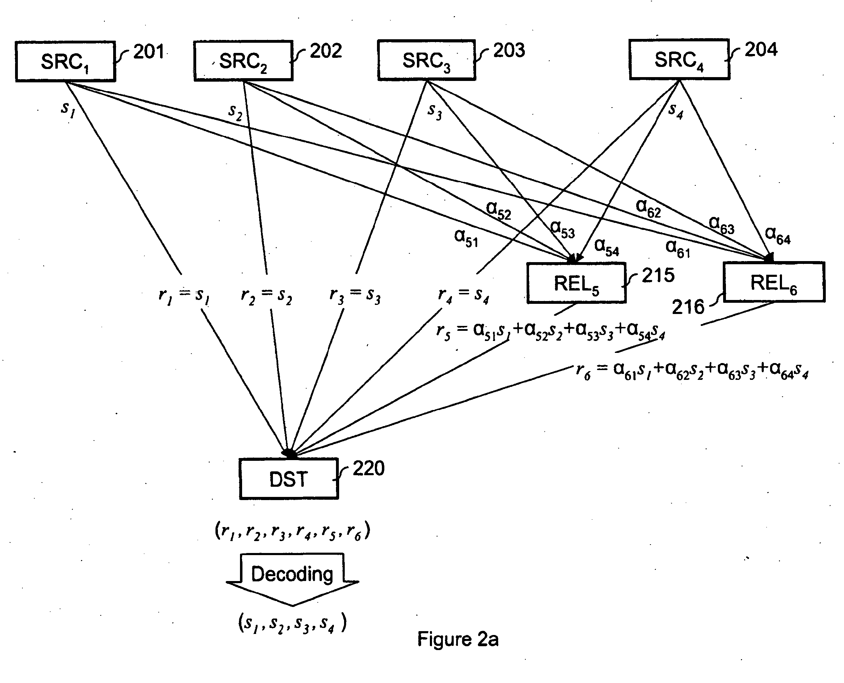

Figure 2a shows another example of a meshed network, with a particular topology. This network comprises four source nodes 201, 202, 203, 204, also respectively called SRC₁, SRC₂, SRC₃ and SRC₄. Each one of these source nodes emits a data packet, respectively called s₁, s₂, s₃, s₄ to all respective connected relay nodes and to the destination node.

Figure 2a also shows two relay nodes 215 and 216, also respectively called REL₅ and REL₆. Both of these relay nodes are connected to each one of the source nodes 201, 202, 203 and 204. The relay node REL_{¡} (i = 5 or 6) performs network coding on the received source packets s₁, s₂, s₃ and s₄, according to the equation rᵢ = Σⱼ₌₁⁴ αᵢⱼ sⱼ with predetermined network coding coefficients αᵢⱼ to determine the encoded packet rᵢ it emits.

Figure 2a also shows the destination node 220, connected to each one of the source nodes 201, 202, 203, 204 (which hence act as relays for themselves) and to both relay nodes 215 and 216, receiving the (possibly erroneous) data packets r₁ = s₁, r₂ = s₂, r₃ = s₃, r₄ = s₄, r₅ and r₆ where rᵢ = (ρᵢ₁, ρ ᵢ₂, ..., _{ρiL}) for i = 1,..., 6 are vectors of the linear space GF(q)^{L}. As in the network showed in Figure 1a, suitable choice of coefficients αᵢⱼ will result in each of the symbol strings of the form (ρ₁ₗ, ρ₂ₗ, ρ₃ₗ, ρ₄ₗ, ρ₅ₗ, ρ₆ₗ) for I = 1, 2, ..., L obtained from said data packets, to form a code word of a 4-dimensional linear error correcting code, as for example a (6, 4)-Reed-Solomon code.

The destination node 120 corrects possible transmission errors using this error correction code. This time, however, encoding is systematic: the original source packets s₁, s₂, s₃ and s₄ can directly be extracted from the corrected data of the received packets r₁, r₂, r₃, r₄, r₅ and r₆ since they are equal to r₁, r₂, r₃, r₄, respectively.

Figure 2b globally summarises the systematic coding operation. The 6-by-4 network coding matrix (αᵢⱼ) is special in the fact that the sub-matrix composed of the upper four lines is the identity matrix. The remaining lower two lines are chosen in such a manner that the columns form a (6, 4)-Reed-Solomon code. The construction of such a systematic encoder is well known and is described for example in "Algebraic Codes on Lines, Planes and Curves. An Engineering Approach", Richard E. Blahut, Cambridge University Press 2008, pages 71-72. Briefly, let g(x) be the generator polynomial for said (6, 4)-Reed-Solomon code - it will have degree 2. Then, for j = 1, 2, 3, 4, calculate the polynomial cⱼ(x) = x^{6-j} - (x^{6-j} mod g(x)) = 1*x^{6-j}+α₅ⱼ*x+α₆ⱼ of degree less than six and insert its coefficients into the j^{th} column of the network coding matrix in descending order with top zero-padding. Note that "a(x) mod g(x)" denotes the remainder polynomial obtained when a(x) is divided by g(x).

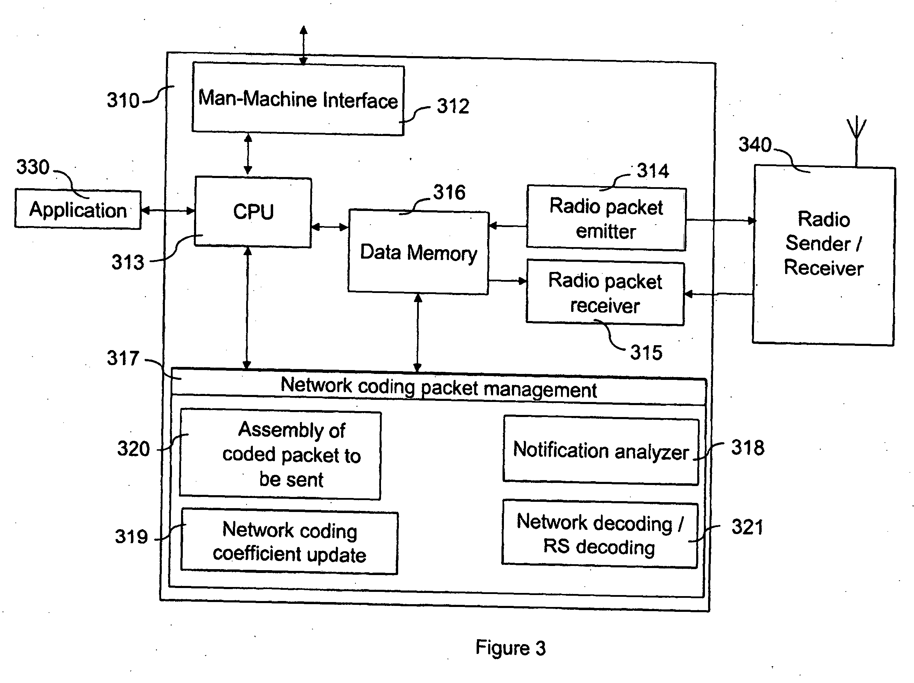

Figure 3 shows the hardware and software architecture for the communication module of a network node suitable for taking the role of a source node 101, 102, 103, 104, of a relay node 111, 112, 113, 114, 115, 116 or of a destination node 120 in a preferred embodiment of the device of the present invention. Said communication module, executing the different algorithms implementing the method of the present invention, corresponds to block 310, while blocks 330 and 340 correspond to its environment.

A Man-machine interface 312 may for example display information on the network connectivity to the user. A CPU 313 executes the program code implementing the algorithms described below. A radio packet emitter 314 reads data and control packets stored in a data memory 316 to transmit them over a Radio Sender / Receiver unit 340. A radio packet receiver 315 stores data and control packets received by the unit 340 into the memory 316. The radio packet receiver is also capable of detecting and signalling at least some cases of erroneous reception, by analysing the RSSI ("Received Signal Strength Indication"), the SNR ("Signal-to-Noise Ratio") or by checking a CRC ("Cyclic Redundancy Check"). The data memory 316 is a RAM ("Random Access Memory") serving as working memory for the CPU 313. The data memory stores, among others, the data and control packets received or to be sent and the network coding coefficients, as calculated when the unit 310 acts as a destination node executing the algorithms described in relation with Figures 5a, 5b, 7a and 7b, or received when the unit 310 acts as a relay node executing the algorithms described in relation with Figures 6a and 6b.

A network coding packet management 317 may be implemented by software executed on CPU 313, by dedicated hardware (allowing performance gains through discharging the CPU 313) or a combination of both. The network coding packet management 317 comprises sub-modules 318, 319, 320 and 321. A notification analyser 318 makes it possible to distinguish between received data and control packets. Furthermore, the notification analyser 318 parses the control packets and carries out the appropriate processing in response, as for example the algorithm described in relation with Figure 6a for a relay node.

A network coding coefficient update manager 319 allows managing the update of the network coding coefficients to be used by the relay node as described in relation with Figure 6a, or by the destination node as described in relation with Figure 7a. An assembly module of codes packets 320 is used by the relay node to generate the packet to be sent, according to the algorithm described in relation with the Figure 6b. A decoding module 321 carries out Reed-Solomon and Network decoding in the destination node, as described in relation with Figure 7b. The original source data recovered by this module 321 is then forwarded to application 330 for further processing. In a source node, the data packets to be sent originate from the application 330.

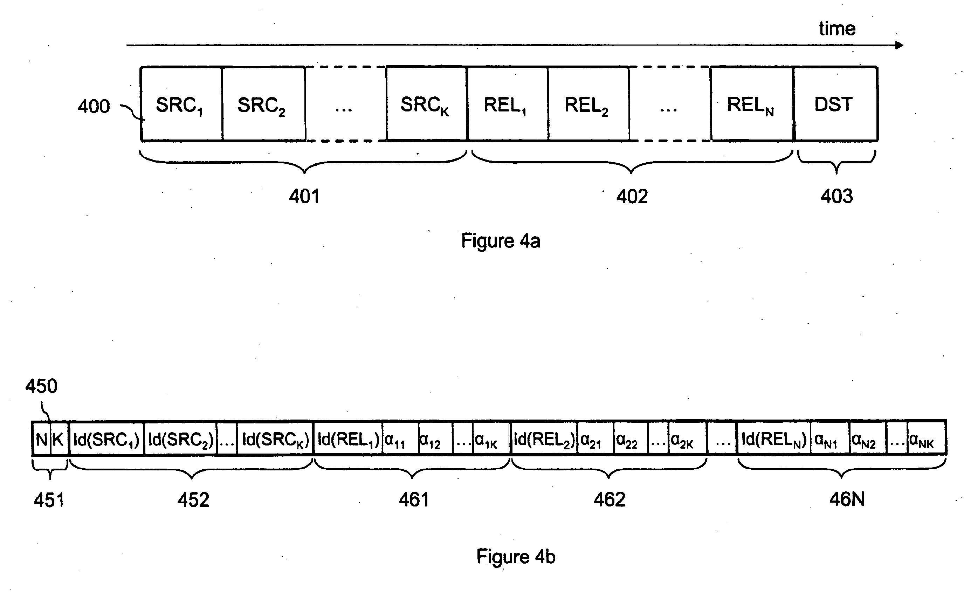

As of Figures 4a and 4b, even if the present invention applies both to wired and wireless networks, a preferred embodiment uses a wireless network, wherein all participating nodes share the common medium by the way of TDMA ("Time Division Multiple Access"). However, the present description is not meant to be limitative and the invention could also be applied in the case of a wireless network sharing the medium for example by the way of FDMA or CDMA, or on the case of a wired network where the medium does not need to be shared (since all nodes transmit their data using separate wires), or even in the case of a hybrid (both wired and wireless) network.

Time division multiple access (TDMA) is a channel access method for shared medium networks wherein several network nodes share the same frequency channel by dividing the signal into different time slots. Figure 4a shows a transmission sequence 400 composed of N+K+1 time slots of equal, predetermined duration. Such a sequence is also referred to as a "Super-Frame". Here K is the number of source nodes (K = 4 in the exemplary networks shown in Figures 1 a and 2a) and N is the number of relay nodes (N = 6 in the exemplary networks shown in Figures 1a and 2a). The sequence 400 is divided into a sub-sequence 401 (sub-divided into K time slots, each time slot allotted to exactly one source node), a sub-sequence 402 (sub-divided into N time slots, each time slot allotted to exactly one relay node) and a subsequence 403 (comprising one time slot allotted to the destination node). After the end of a super-frame, a new one will start. The predetermined duration of a time slot and the numbers N and K are supposed to be known to all network nodes. Furthermore each network node is capable of detecting the start of a new super-frame, the start of a new time slot dedicated to any other network node that is connected to itself and the start of the timeslot allotted to itself for emission.

It can be seen that each relay node can receive the source data packets from the respective connected source nodes during subsequence 401 of a given super-frame 400, perform network coding and transmit its encoded packet during its allotted time slot within the sub-sequence 402 of the same super-frame. The destination node receives, stores and processes all encoded packets of a given super-frame to recover the source packets emitted during the same super-frame. Synchronization is easily achieved and mixing of encoded data frames belonging to different super-frames (which would be a problem for recovering the original source data) can easily be avoided.

As already stated in the description of Figures 1a and 2a, we assume that all data packets that are subjected to network coding have a payload of fixed predetermined length L and a header that might not be subjected to network coding. Additionally, all nodes are capable of emitting and receiving control packets conveying different kinds of network management information rather than payload data. Such control packets can be easily distinguished from data packets (for example by having a different header), are not subject to network coding and may have a different length than data packets. A control packet may be emitted in the same time slot as a data packet (preceding or following it), or instead of a data packet. Control packets will typically occupy only a very small portion of the total bandwidth available in the network; consequently classical schemes of coping with errors or loss, as acknowledgements and retransmission, or flooding can be employed without impacting the (possibly high-bandwidth) payload data transmission.

Figure 4b shows an example of a control packet 450 indicating network coding coefficients that are determined in embodiments of the present invention by a centralized network node. In a preferred embodiment, the destination node 120 performs the determination of network coding coefficients, described in a more detailed manner in relation with Figure 7a, during an initialisation phase and possibly also later, whenever a change in the network topology (adding and/or removing a node or a link) is detected. Such a packet, after having been provided by said centralized node, is propagated in the whole network through a suitable broadcasting method, as spanning tree broadcasting or flooding, to reach all network nodes, enabling them to take into account the new coefficients in a synchronized manner at the start of a new super-frame. The packet 450 comprises:
- a field 451 indicating the number of relay nodes N and the number of source nodes K;
- a field 452 indicating the unique identifiers of the K source nodes SRC₁, ..., SRCₖ and
- N fields 461, ..., 46N; the field 46i for i = 1, 2, ..., N being composed of the unique identifier of the relay node REL_{¡}, followed by the list of K network coding coefficients αᵢ₁, αᵢ₂, ..., α_{iK} extracted from the i^{th} row of the network coding matrix.

Figures 5a and 5b show the algorithm for determining the coefficients of the network coding matrix (αᵢⱼ), carried out by a centralized node of the meshed network in question. The goal of this algorithm is to find a generator matrix for an (N, K)-Reed-Solomon code (i.e., an N-by-K matrix of rank K wherein each of the K columns is a code word of said code) with the constraint that zeros must be positioned in accordance with links that do not exist between a source node and a relay node. In a preferred embodiment, said centralized node is the destination node 120.

The start step 500 of the algorithm is triggered in the initialisation phase of said network, and possibly also later whenever a change in the network topology (adding and/or removing a node or a link) is detected. Step 501 consists in determining the number K of source nodes. Step 502 consists in determining the number N of relay nodes. Step 503 consists in gathering the information on the network topology, i.e., the links existing in the network between the source nodes and the relay nodes (we assume here that each relay node is connected to the destination node).

Protocols allowing the exchange of information about the unique identifiers of the network nodes and the connectivity are well known and will not be described here. It has to be noted that, in the case of a wireless network, we assume a link is present between two nodes when radio communication between them can take place in a sufficiently reliable manner, for example when the RSSI or the SNR reach a certain, predetermined threshold.

During a step 504, the network topology is analysed in order to find out if the connectivity in the network is sufficient to implement the described coding scheme. Note that an (N, K)-Reed-Solomon code has a minimum Hamming weight of N-K+1. In other words, no code word except the all-zero word has more than K-1 zeros. In the context of our network (remember that each of the N rows of the network coding matrix (αᵢⱼ) corresponds to a relay node while each of the K columns corresponds to a source node), this means that each source node must be connected to at least N-K+1 relay nodes (otherwise, the only code word having zeros at positions corresponding to absent links would be the all-zero word. Hence the matrix would not have rank K).

This condition, concerning each single source node, has to be generalized to all non-empty subsets of the set of source nodes as follows. Consider a non-empty subset S_{T} of the set S of all source nodes, with the cardinality K_{T} where 0<K_{T}≤K (K being the cardinality of S). Let R_{T} be the set of relay nodes that are connected to at least one of the source nodes in the set S_{T}. Let N_{T} be the cardinality of R_{T}, N_{T}≤N. The set of (N, K)-Reed-Solomon code words from which the K_{T} code words corresponding to the source nodes from S_{T} can be chosen is a linear subspace of dimension K-(N-N_{T}) (all the code words together form a linear subspace of dimension K and all the chosen code words must have zeros on the N-N_{T} positions corresponding to the relay nodes that are not in R_{T}). On the other hand, the dimension of said subspace must be at least K_{T}, otherwise there would not be K_{T} linearly independent vectors. Hence the desired network coding matrix with K linearly independent columns would not exist. To summarise, K-(N-N_{T})≥K_{T} or N_{T}-K_{T}≥N-K is needed. This inequality shall be fulfilled for any non-empty subset S_{T} of the set of nodes S.

Test 504 calculates the difference N_{T}-K_{T} for each such subset S_{T} (i.e., the cardinality of the set of relay nodes connected at least one of the source nodes from S_{T}, minus the cardinality of S_{T}) and determine the minimum M of these differences. Note that M≤N-K because the whole set S_{T}=S of source nodes is also taken into account for determining M. If M=N-K the outcome of test 504 is positive and a step 506 is proceeded to. Otherwise the outcome is negative and a step 505 is proceeded to.

Step 505 consists in virtually augmenting the network, for the purpose of calculations only, through adding N-K-M (K being the initial number of source nodes) imaginary source nodes, each of them considered to be connected to all N relay nodes. The network augmented in this way necessarily passes the test 504 carried out after replacing K by the adjusted value of K_{adj} = K+N-K-M = N-M. Hence step 506 is proceeded to, except that during the later steps, one can omit the calculation of the network coding coefficients for the matrix columns corresponding to said imaginary source nodes, since relay nodes never have to process data originating from said imaginary source nodes and consequently do not need network coding coefficients corresponding to them.

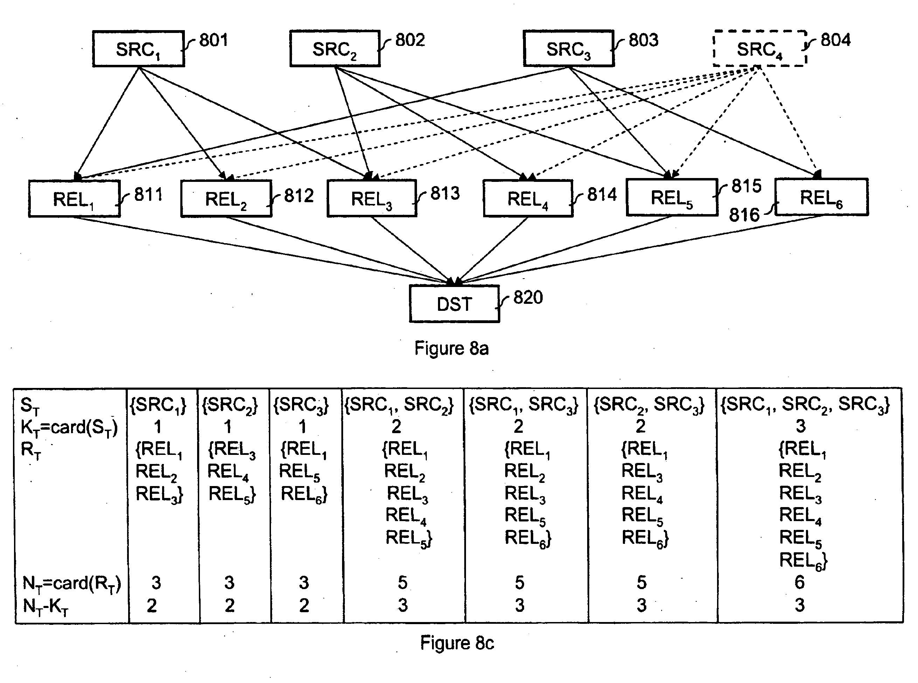

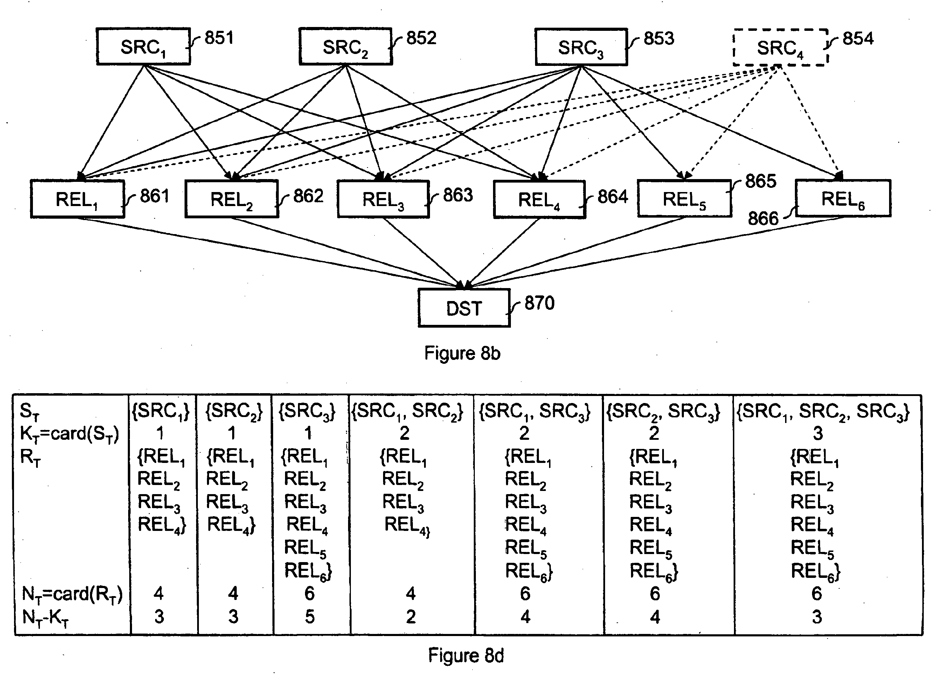

Note that the following steps are applicable as long as N>K_{adj}. The case of N=K_{adj} corresponds to the limit case where no error or erasure correction can be carried out any more but all original source packets can still be recovered by the destination node as long as no transmission errors occur. In case of N<K_{adj}, even this becomes impossible, in which case the algorithm terminates with a failure notice. Examples of meshed networks where the adjustment of K of step 505 is necessary are described in relation with Figures 8a and 8b.

Increasing the dimension from K to K_{adj} while retaining the code block length N of a Reed-Solomon code decreases its redundancy and hence its error correction capacity (because correcting E errors and F erasures in a code word is possible as long as 2*E+F≤N-K_{adj}), but retains the advantages of the present invention in many cases where the connectivity between source nodes and relay nodes is too weak to reach the full error correction capacity of an (N, K)-Reed-Solomon code.

During step 506, a Galois Field GF(q) with sufficient size q for implementing the present invention is chosen. The maximal block length N of a non-extended (N, K)-Reed-Solomon code is equal to q-1. In a preferred embodiment, q = 2⁸ = 256 and the number of relay nodes N is less or equal to 255, a restriction which does not appear to be a practical hindrance in most cases. If N is strictly less than q-1, the (N, K)-Reed-Solomon code used will be a so-called "shortened code". In an alternative implementation, the number m of bits per symbol is chosen in such a manner that N<2^{m} and the Galois Field GF(2^{m}) is used.

During a step 507, a matrix with N rows and K columns is created (each row corresponding to a relay node and each column corresponding to a source node), wherein the coefficients of said matrix are capable of representing each of the q symbols of GF(q) as well as two special symbols different from each one of the symbols from GF(q), representing an "indeterminate" value and an "erasure" value. Initially, each coefficient of the matrix is set to the indeterminate value.

During a step 508, the connectivity between all the source nodes and all the relay nodes is taken into consideration and the value 0 (zero) is positioned into the coefficient αᵢⱼ if and only if no connection exists between the source node SRCⱼ and the relay node RELᵢ. The remaining coefficients, corresponding to existent connections, remain indeterminate.

During a step 509 (Figure 5b), the column index j is initialised to 1. (Note that the matrix columns, corresponding to the source nodes, are numbered from 1 to K).

During a step 510, Zⱼ, the number of zeros in column j, is determined. Note that Zⱼ<K-1 is satisfied after step 504 and possibly the adjustment of K of step 505.

During a step 511, among the coefficients in column j with an indeterminate value (i.e., not 0), the coefficient with the lowest row index is set to 1 (1 being the neutral element of GF(q) with regard to multiplication). Note that, for any suitable choice of the column vector, there always exists a scalar multiple of said column vector having a 1 at the lowest non-O position which is equally suitable. Hence the choice of step 511 does not really restrict the space of possible solutions.

During a step 512, among the coefficients in column j with an indeterminate value (i.e., not 0 or 1), the K-Zⱼ-1 coefficients with the lowest row indices are set to randomly chosen symbols from GF(q). Any true or pseudorandom generator having sufficiently high periodicity is suitable in this step.

During a step 513, the remaining N-K coefficients in column j with an indeterminate value are set to the "erasure" value.

During a step 514, an (N, K)-Reed-Solomon code word is generated in column j taking into account the N-K erasures, using a well-known correction technique. The resulting code word is equal to the original word in the K positions that were not "erasures" (in particular, the zeros positioned in step 508 are remaining), while said N-K erasures are replaced by symbols from GF(q). It is a well-known fact that exactly one such a code word exists.

During a step 515, the column index j is incremented by one. During a step 516, it is determined if j is less than or equal to K. If yes, a step 510 is proceeded to (consequently, steps 510 to 514 are repeated for j = 1 to K). Otherwise a step 517 is proceeded to.

During step 517, all K columns of the matrix are filled with (N, K)-Reed-Solomon code words and it is determined if the rank of the matrix is equal to K. If the rank of the matrix is less than K, the columns are linearly dependent and step 509 is performed again, after resetting all non-O coefficients to the indeterminate value. Consequently, steps 509 to 517 will be repeated, but during step 512, different random coefficients will be chosen, resulting in a different matrix which will eventually have rank K. Note that without the network topology verification step 504 and the adjustment step 505, insufficient network connectivity would yield in an infinite loop here. In an alternative embodiment, the verification step 504 at the beginning of the algorithm is skipped and the adjustment step 505 is performed when the number of unsuccessful iterations resulting from test 517 exceeds some predetermined threshold. Binary search could be used to determine the highest possible code dimension K. If the rank of the matrix is equal to K, a step 518 is proceeded to.

During step 518, the obtained matrix (αᵢⱼ) is output for further processing as, for example, processing described in relation with Figure 7a. Then the execution of the algorithm stops during a step 519.

Figure 6a and 6b show the two main algorithms executed by the relay node RELᵢ (i = 1, 2, ..., N).

Figure 6a shows steps for updating the network coding coefficients in a preferred embodiment. During a step 601 consisting in waiting for and then performing reception of a control packet 450 originating from the centralized node carrying out the determination of the network coding coefficients ₍αᵢⱼ), and containing said coefficients.

During a step 602, the relay node extracts the total number of relay nodes N and the total number of source nodes K from field 451 of packet 450 and stores them. During a step 603, the list of all K source node unique identifiers is extracted from field 452 and stored. During a step 604, field 46i is located by comparing the relay node unique identifiers REL₁, REL₂, ..., REL_{N} contained at the beginning of fields 461, ..., 46N with the own unique identifier of relay node REL_{¡}. During a step 605, the K network coding coefficients relevant for the relay node RELᵢ, αᵢ₁, αᵢ₂, ..., α_{iK} are extracted from field 46i and stored for later processing (see step 658 described in relation with Figure 6b). Note that, unless an error occurred, at this point αᵢⱼ ≠ 0 only if the source node SRCⱼ is connected to the relay node RELᵢ,

Figure 6b shows steps for data reception, encoding and retransmission in a preferred embodiment. During a step 650, the start of a new super-frame is detected. During a step 651, the source node counter j is initialised to 1. During a step 652, the start of the time slot allotted to source node SRCⱼ within subsequence 401 of the super-frame 400 is awaited. During a step 653, it is checked if source node SRCⱼ is connected to relay node REL_{¡}. If yes, a step 654 is proceeded to. Otherwise a step 655 is proceeded to.

Step 654 consists in receiving and storing the data packet sⱼ of length L, provided by the source node SRCⱼ. Whenever a reception error is detected during step 654 (as for example through analysing RSSI or SNR, or calculating a CRC), this detection is memorized in a flag for the purpose of a step 657 described below.

Step 655 consists in incrementing by one the source node counter j. During a step 656, it is determined if the source node counter j is less than or equal to the total number of source nodes K. If yes, step 652 is proceeded to (consequently, steps 652 to 654 are repeated for j = 1, 2, ..., K). Otherwise, step 657 is proceeded to.

During step 657, it is determined if a reception error was detected during any one of the preceding executions of step 654 within the current super-frame 400. If yes, a step 661 is proceeded to. Otherwise, during a step 658, the linear combination of the received source packets sⱼ (being vectors of length L over GF(q)), using the scalar coefficients αᵢⱼ as received and stored according to step 605 described above, is calculated to obtain the encoded packet rᵢ, being also a vector of length L over GF(q). Note that source packets sⱼ that are not available for calculation to relay node RELᵢ because their originating source nodes SRCⱼ are not connected, are not needed here since the corresponding coefficients αᵢⱼ are equal to 0.

In a variant, the value of rᵢ is calculated in a cumulative manner during step 654, after initialising the value vector rᵢ with the null vector during step 651.

Following step 658, during a step 659, the relay node RELᵢ awaits the start of the time slot allotted to itself within subsequence 402 of the super-frame 400. During a step 660, the relay node RELᵢ transmits the encoded packet rᵢ. The process then stops, during a step 663, until the start of a new super-frame is detected.

During step 661, the relay node RELᵢ awaits the start of the time slot allotted to itself within subsequence 402 of the super-frame 400. Then, during a step 662, an error notification is transmitted. In particular embodiments, the relay node RELᵢ simply remains silent during its allotted time slot, a condition appropriately detectable by the destination node. In other embodiments, the relay node RELᵢ transmits, during step 662, a partial linear combination taking into account only the source data packets for which no reception error was detected, together with an indication of the missing sources. (The destination node could use such information, representing supplementary linear equations, to perform redundant data verifications after step 760 described in Figure 7b, for increasing the confidence level of the decoded data.) In any case, step 663 is then proceeded to.

Figures 7a and 7b show the main algorithms executed by the destination node DST.

Figure 7a shows steps for updating the network coding coefficients in a preferred embodiment. A step 700 consists in detecting the start of the network initialisation phase. This step can also be triggered again later, whenever a modification of the network topology (adding and/or removing a source or relay node or a network connection) is detected. During a step 701, the destination node receives, from each relay node RELᵢ, a dedicated control packet, comprising the unique identifier of said relay node RELᵢ, as well as the list of the unique identifiers of all source nodes connected to said relay node RELᵢ. During a step 702, the destination node uses the received information to determine the total number N of relay nodes and the total number K of source nodes existing in the network, as well as the network topology described by the existing connections between the source nodes and the relay nodes.

During a step 703, the destination node constructs the N-by-K network coding matrix A=(αᵢⱼ) as described in relation with Figures 5a and 5b. During a step 704, this matrix is decomposed into a product A=B*C⁻¹ (or A*C=B), wherein B is an N-by-K matrix describing the systematic encoder for an (N, K)-Reed-Solomon code, as in Figure 2b, and C is an invertible K-by-K matrix. This decomposition is advantageously achieved by a procedure known to those skilled in linear algebra as "Gauss-Jordan elimination", carried out column-wise on the matrix A augmented with K supplementary lines containing the K-by-K identity matrix. In other words, C is the inverse matrix of the K-by-K sub-matrix composed of the upper K rows of matrix A. Matrix C is stored by the destination node DST for the purpose of simple, optimised execution of a step 760 described below.

During a step 705, the destination node waits for the start of the timeslot allotted to it within the subsequence 403 of the super-frame 400. Next, a step 706 consists in emitting the control frame 450 comprising the field 451 indicating N and K, the field 452 indicating the list of all source node unique identifiers and the fields 461, ..., 46N each indicating a unique identifier of a relay node, together with the list of network coding coefficients αᵢⱼ to be applied by said relay node. During a step 707, the process of Figure 7a stops.

Figure 7b shows an algorithm of encoded data packet reception, Reed-Solomon decoding and recovery of the original source data as applied by the destination node DST in a preferred embodiment. This process starts with a step 750, during which a start of a new super-frame 400 is detected.

During a step 751, the relay node counter i is initialised to 1. During a step 752, the destination node waits for the start of the time slot allotted to the relay node REL_{¡} within the subsequence 402 of the super-frame 400. During a step 753, the encoded data packet rᵢ is received, this packet being an element of GF(q)^{L}.

During a step 754, it is determined if said data packet has been successfully received. If yes, a step 755 is proceeded to. Otherwise, i.e., when a reception error is detected (as for example through analysing RSSI or SNR, or calculating a CRC) or when the error notification provided by the relay node in step 662 is detected, a step 756 is proceeded to. During step 755, the received data packet rᵢ is stored in the i^{th} row of an N-by-L matrix (ρᵢₗ). During step 756, said row is filled with erasure symbols.

During a step 757, the relay node counter i is incremented by 1. During a step 758, it is determined if the relay node counter i is less than or equal to the total number of relay nodes N. If yes, step 752 is proceeded to (consequently, steps 752 to 756 are repeated for i = 1, 2, ..., N). Otherwise, during a step 759, (N, K)-Reed-Solomon error and erasure correction is carried out for each one of the L columns of aforementioned matrix (ρᵢₗ), taking into account possible erasures as stored during step 756. Any one of the well-known Reed-Solomon error correction algorithms, as Berlekamp-Massey (see Richard E. Blahut: "Algebraic Codes on Lines, Planes and Curves. An Engineering Approach", Cambridge University Press 2008) or Kötter / Guruswami-Sudan / Roth-Ruckenstein (see R. J. McEliece: "The Guruswami-Sudan Decoding Algorithm for Reed-Solomon Codes", Draft of 16 April 2003), is suitable for implementing step 759.

An error correction failure, caused by too many errors or erasures, causes the algorithm to abort with an error notification. Otherwise, during a step 760, the original K-by-L source data matrix (σⱼᵢ) (the rows of which constitute the original source data packets sⱼ) is recovered from the error-corrected N-by-L received-data matrix (ρᵢₗ). This is done through solving the linear equation system (ρᵢₗ) = (αᵢⱼ)*(αⱼₗ). While this system is over-determined (N equations for K unknowns with N>K), the equations are not contradictory due to the Reed-Solomon error correction. Dropping the N-K last rows of matrix (ρᵢₗ) and multiplying the obtained K-by-L matrix by the matrix C previously determined during step 704, one obtains the wanted source data matrix: (σⱼₗ) = C*(ρᵢₗ).

During a step 761, the K rows from said matrix (σⱼₗ), which constitute the original source data packets sⱼ of length L, are output for further processing (not shown) by the application 330. The algorithm stops with a step 762, until the start of the next super-frame 400.

Figures 8a and 8b show two examples of mesh networks, each one composed of initially three source nodes, six relay nodes and one destination node, illustrating more in detail step 504 and the step of adjusting the number of source nodes 505.

Figure 8a shows initially three source nodes 801, 802 and 803, also called respectively SRC₁, SRC₂ and SRC₃. Furthermore, six relay nodes 811 to 816, also called respectively REL₁, to REL6 are shown. A destination node 820, also called DST is also shown.

Source node SRC₁ 801 is connected to relay nodes REL₁ 811, REL₂ 812 and REL₃ 813. Source node SRC₂ 802 is connected to relay nodes REL₃ 813, REL₄ 814 and REL₅ 815. Source node SRC₃ 803 is connected to relay nodes REL₅ 815, REL₆ 816 and REL₁ 811. Each one of the six relay nodes is connected to the destination node 820 DST. Given this connectivity, the subsets of source nodes S_{T}, subsets of relay nodes R_{T} connected to said subsets of source nodes, the cardinalities of said subsets K_{T} respectively N_{T} and the differences N_{T}-K_{T} as considered in the test 504 are summarised in the table of Figure 8c showing source node subsets for Figure 8a.

It can be seen that the minimum value M of the differences N_{T}-K_{T} is 2 (a bottleneck exists for each single-element subset of the set of source nodes). Hence it is not possible to construct a (6, 3)-Reed-Solomon coding for the given network. However, adding an imaginary source node 804, called SRC₄, which is connected to each one of the six relay nodes, provides an augmented network with four sources, for which a (6, 4)-Reed-Solomon coding can be constructed.

Figure 8b shows three source nodes 851, 852 and 853, also respectively called SRC₁, SRC₂ and SRC₃. There are also six relay nodes 861, to 866, also called REL₁ to REL₆ and a destination node 870 DST in Figure 8b. Both nodes SRC₁ 851 and SRC₂ 852 are connected to the relay nodes REL₁ 861 to REL₄ 864. Node SRC₂ 852 is connected to each one of the six relay nodes 861 to 866. Each one of the six relay nodes 861 to 866 is connected to the destination node DST 870. Given this connectivity, the subsets of source nodes S_{T}, subsets of relay nodes R_{T} connected to said subsets of source nodes, the cardinalities of said subsets K_{T} respectively N_{T} and the differences N_{T}-K_{T} as considered in the test 504 are summarised in the table shown in Figure 8d.

It can be seen that the minimum value M of the differences N_{T}-K_{T} is 2 (a bottleneck exists for the two-element subset {SRC1, SRC2}). Hence it is not possible to construct a (6, 3)-Reed-Solomon coding for the network shown in Figure 8b. However, adding an imaginary source node 854, also called SRC₄, which is connected to each one of the six relay nodes 861 to 866, provides an augmented network with four sources, for which a (6, 4)-Reed-Solomon coding can be constructed.

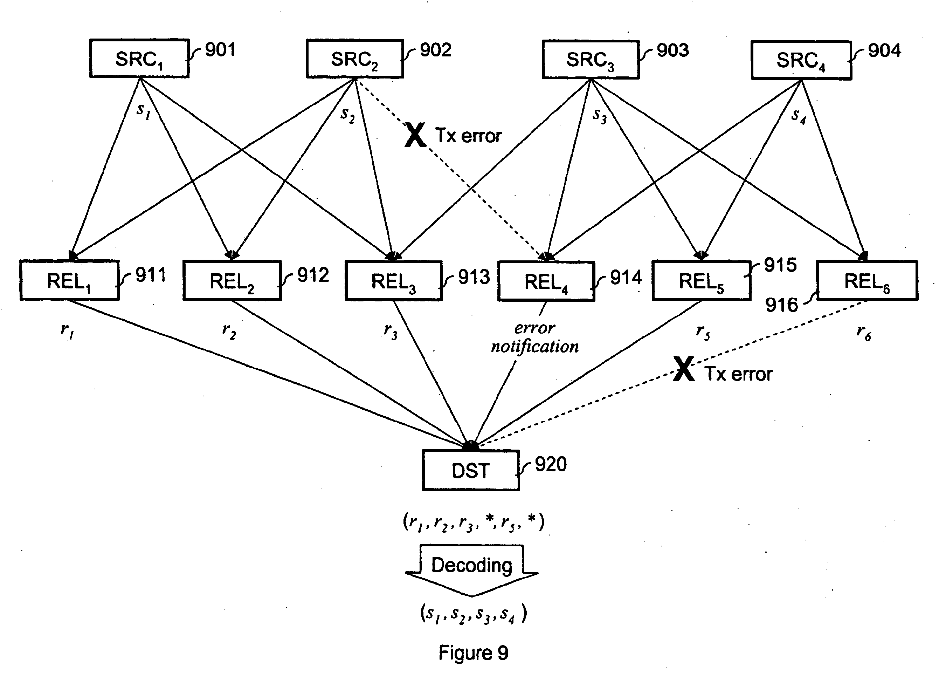

Figure 9 gives a synoptic view of the mapping of detected transmission errors to erasures in an exemplary meshed network. It depicts a network comprising four source nodes 901, 902, 903 and 904, or SRC₁ to SRC₄ and transmitting respectively data packets s₁ to s₄. Six relay nodes 911 to 916, or REL₁ to REL₆, performing network coding and a destination node 920, or DST are also shown. The connectivity is identical to the network shown in Figure 1 a and a (6, 4)-Reed-Solomon coding is applied.

Consider now that due to a moving obstacle or due to an electromagnetic perturbation, a first transmission error affects the transmission of the source packet s₂ from source node SRC₂ 901 to relay node REL₄ 914 and a second transmission error affects the transmission of the encoded packet r₆ from relay node REL₆ 916 to destination node DST 920. As described above, the relay node REL₄ 914 detects the first transmission error during step 657 of its reception process and executes step 662 of transmitting an error notification, while the remaining five relays node REL₁ 911 to REL₃ 913, REL₅ 915 and REL₆ 916 transmit respectively their encoded packets r₁ to r₃, r₅ and r₆ during step 660. The destination node DST 920 correctly receives the encoded packets r₁, r₂, r₃, r₅ (hence executing step 755 for them) and the error notification from relay node REL₄ 914. Furthermore, the destination node 920 detects the erroneous reception of r₆ from relay node REL₆ (hence storing of erasure marks, marked by a "*" in the figure, at positions 4 and 6 due to executing step 756). Finally, the two erasures are corrected during step 759 (provided that no other, undetected transmission errors occurred - such errors would result in undetected erroneous correction if no supplementary measures, as CRC, are taken). In the present example, such a correction would not have been possible if one or both transmission errors had not been detected or if relay node REL₄ 914 had not propagated the error it detected, since a (6, 4)-Reed-Solomon code may correct 1 or 2 erasures (without errors) but only one error of unknown position.

In another particular embodiment (not shown) of the present invention, only the coefficients of the generator matrix corresponding to existing links between source nodes and relay nodes are sent from the device which generates the generator matrix to the relay nodes (see fields 46i). The sent coefficients thus are the coefficients remaining after step 508. In this particular embodiment, the relay node positions "0" in the matrix (σⱼₗ) of received data packets, at each position corresponding to a source node from which no data packet is received. Thus, whatever the value of the coefficients at the corresponding positions of the matrix of coefficients used by the relay node for calculating the linear combinations, the multiplication of said coefficients by "0" is "0", i.e., the same value as in the particular embodiments illustrated in the Figures.

Generally speaking, at least the remaining coefficients after positioning "0" for each position in the generator matrix that corresponds to a source node and a relay node between which no link exists, are to be distributed to the relay nodes.

## Claims

1. A method for generating network coding coefficients to be distributed in a network comprising a set of K source nodes and N relay nodes, at least one relay node receiving data packets from a subset of said set of K source nodes, the data packets being composed of symbols from a predetermined Galois Field, **characterised in that** it comprises the steps of:
- determining (503, 702) network links between the K source nodes and the N relay nodes;
- constructing (507, 703) a generator matrix for a linear error correcting code, of dimension N*K, with coefficients from said Galois Field, defined such that each row of the generator matrix corresponds to a relay node and each column of the generator matrix corresponds to a source node, and such that at each position in the generator matrix that corresponds to a source node and a relay node between which no link exists said coefficient is a zero coefficient, and
- determining (511, 512, 513) the coefficients at positions of the generator matrix that correspond to a source node and a relay node between which a link exists such that each said column corresponds to a codeword of said linear error correcting code and the codewords corresponding respectively to the columns are all linearly independent, the coefficients of each said row being used by the relay node corresponding to the row concerned for linear network coding by linearly combining data packets received from source nodes.

2. The method according to claim 1, wherein the step of constructing said generator matrix comprises determining the number K of source nodes (501), determining the number N of relay nodes (502), gathering the information on the links existing in the network between the source nodes and the relay nodes (503) and determining if each non-empty subset of the set of K source nodes is connected to at least N-K+c relay nodes, wherein c with 0≤c≤K is the cardinality of said subset.

3. The method according to claim 2, wherein the step of constructing said generator matrix comprises the steps of:
- for each non-empty subset of the set of K source nodes, calculating the difference between the cardinality of the set of relay nodes connected to at least one of the source nodes in said subset and the cardinality of said subset;
- determining the minimum M of said differences and
- determining (504) that a generator matrix exists if M = N-K.

4. The method according to either one of claims 2 or 3, wherein, if at least one subset with cardinality c, with 0<c≤K, of the set of K source nodes is connected to less than N-K+c relay nodes, during the step of determining said coefficients, the network is virtually augmented (505) by adding at least one imaginary source node considered to be connected to each relay node.

5. The method according to claim 4, wherein, if M<N-K, K is replaced by an adjusted number K_{adj} equal to N-M, the number of imaginary source nodes being K_{adj}-K.

6. The method according to any one of claims 1 to 5, wherein the step of constructing said generator matrix comprises:
- erasing up to h positions of each column of the generator matrix that differ from the positions containing zeros, wherein h is the erasure correcting capacity of the primary error correcting code, h being equal to the minimum Hamming distance of said code minus 1;
- setting values (512, 513) for coefficients corresponding to positions that differ from those positions containing either zero coefficients or erasures, if any; and
- recovering the erased positions by associating with each column a codeword of the linear error correcting code, wherein the values set in the setting step are such that all the columns of the generator matrix are linearly independent.

7. The method according to claim 6, wherein the error correcting code is a Reed-Solomon code of size N and dimension K.

8. The method according to any one of claims 1 to 7, wherein the step of determining said coefficients is performed by one node of the network.

9. A method for communicating data packets over a network comprising a set of K source nodes and N relay nodes, at least one relay node receiving data packets from a subset of said set of K source nodes, the data packets being composed of symbols from a predetermined Galois Field, **characterised in that** it comprises:
- a step of obtaining network coding coefficients (605) generated according to any one of claims 1 to 8,
- a step of assigning the coefficients associated to each row of the generator matrix to its corresponding relay node,
- a step of linear network coding by linearly combining, in said relay node, data packets received from source nodes using said coefficients and
- a step of sending the resulting linear combination from said relay node to the destination node.

10. A method for communicating data packets over a network comprising a set of K source nodes and N relay nodes, at least one relay node receiving data packets from a subset of said set of K source nodes, the data packets being composed of symbols from a predetermined Galois Field, **characterised in that** it comprises:
- a step of obtaining network coding coefficients generated according to any one of claims 1 to 8,
- a step of receiving at least one of linear combinations of data packets from source nodes (753), said linear combination using coefficients at positions of the generator matrix that corresponds to a source node and a relay node between which a link exists and
- a step of recovering data as sent by the source nodes, by solving a linear equation system (760) composed of the received linear combinations.

11. The method according to either one of claims 9 or 10, wherein a relay node detecting an erroneous or missing data reception from a source node connected to it sends a notification to the destination node, enabling the destination node to mark the missing or erroneous linear combination from said relay node as erasure.

12. A device (310) for generating network coding coefficients to be distributed in a network comprising a set of K source nodes (101, 102, 103, 104)and N relay nodes (111, 112, 113, 114, 115, 116), at least one relay node receiving data packets from a subset of said set of K source nodes, the data packets being composed of symbols from a predetermined Galois Field, **characterised in that** it comprises:
- a means (313) for determining network links between the K source nodes and the N relay nodes
- a means (313) for constructing a generator matrix for a linear error correcting code, a generator matrix, of dimension N*K, with coefficients from said Galois Field, defined such that each row of the generator matrix corresponds to a relay node and each column of the generator matrix corresponds to a source node, and such that at each position in the generator matrix that corresponds to a source node and a relay node between which no link exists said coefficient is a zero coefficient, and
- a means (313) for determining the coefficients at positions of the generator matrix that correspond to a source node and a relay node between which a link exists such that each said column corresponds to a codeword of said linear error correcting code and the codewords corresponding respectively to the columns are all linearly independent, the coefficients of each said row used by the relay node corresponding to the row concerned for linear network coding by linearly combining data packets received from source nodes.

13. A device for communicating data packets over a network comprising a set of K source nodes and N relay nodes, at least one relay node receiving data packets from a subset of said set of K source nodes, the data packets being composed of symbols from a predetermined Galois Field, **characterised in that** it comprises:
- means for obtaining network coding coefficients generated by a device according to claim 12,
- means for receiving at least one of linear combinations of data packets from source nodes, said linear combination using coefficients at positions of the generator matrix that corresponds to a source node and a relay node between which a link exists and
- means for recovering data as sent by the source nodes, by solving a linear equation system composed of the received linear combinations.

14. A computer program loadable into a computer system, said program containing instructions enabling the implementation of the method according to any one of claims 1 to 11, when that program is loaded and executed by a computer system.

15. An information carrier readable by a computer or a microprocessor storing instructions of a computer program, according to claim 14.

## Patentansprüche

1. Verfahren zum Erzeugen von Netzwerkcodierungskoeffizienten, die in einem Netzwerk zu verteilen sind, das einen Satz von K Quellknoten und N Relaisknoten aufweist, wobei zumindest ein Relaisknoten Datenpakete von einem Unter-Satz des Satzes von K Quellknoten empfängt, wobei die Datenpakete aus Symbolen aus einem vorbestimmten Galois-Feld zusammengesetzt sind, **gekennzeichnet durch** die Schritte
Bestimmen (503, 702) von Netzwerkverbindungen zwischen den K Quellknoten und den N Relaisknoten,
Erstellen (507, 703) einer Erzeugungsmatrix für einen linearen Fehlerkorrekturcode einer Dimension N*K mit Koeffizienten aus dem Galois-Feld, die derart definiert ist, dass jede Zeile der Erzeugungsmatrix einem Relaisknoten entspricht und jede Spalte der Erzeugungsmatrix einem Quellknoten entspricht, und derart, dass bei jeder Position in der Erzeugungsmatrix, die einem Quellknoten und einem Relaisknoten entspricht, zwischen denen keine Verbindung besteht, der Koeffizient ein Null-Koeffizient ist, und
Bestimmen (511, 512, 513) der Koeffizienten bei Positionen der Erzeugungsmatrix, die einem Quellknoten und einem Relaisknoten entsprechen, zwischen denen eine Verbindung besteht, so dass jede der Spalten einem Codewort des linearen Fehlerkorrekturcodes entspricht, und dass die jeweils den Spalten entsprechenden Codewörter alle linear unabhängig sind, wobei die Koeffizienten jeder der Zeilen **durch** den Relaisknoten entsprechend der betreffenden Zeile für lineare Netzwerkcodierung **durch** lineares Kombinieren von von Quellknoten empfangenen Datenpaketen verwendet werden.

2. Verfahren nach Anspruch 1, wobei der Schritt eines Erstellens der Erzeugungsmatrix ein Bestimmen (501) der Anzahl K von Quellknoten, ein Bestimmen (502) der Anzahl N von Relaisknoten, ein Sammeln (503) der Information bezüglich der in dem Netzwerk zwischen den Quellknoten und den Relaisknoten bestehenden Verbindungen, und ein Bestimmen umfasst, ob jeder nicht leere Unter-Satz des Satzes von N Quellknoten mit zumindest N-K+c Relaisknoten verbunden ist, wobei c mit 0<c≤K die Kardinalität des Unter-Satzes ist.

3. Verfahren nach Anspruch 2, wobei der Schritt eines Erstellens der Erzeugungsmatrix die folgenden Schritte aufweist:
für jeden nicht leeren Unter-Satz des Satzes von K Quellknoten: Berechnen der Differenz zwischen der Kardinalität des Satzes von mit zumindest einem der Quellknoten in dem Unter-Satz verbundenen Relaisknoten und der Kardinalität des Unter-Satzes,
Bestimmen des Minimums M der Differenzen, und
Bestimmen (504), dass eine Erzeugungsmatrix besteht, wenn M = N-K ist.

4. Verfahren nach einem der Ansprüche 2 oder 3, wobei, wenn zumindest ein Unter-Satz mit einer Kardinalität c mit 0<c≤K des Satzes von K Quellknoten mit weniger als N-K+c Relaisknoten verbunden ist, das Netzwerk während dem Schritt eines Bestimmens der Koeffizienten virtuell erweitert wird (505) durch Hinzufügen zumindest eines als mit jedem Relaisknoten verbunden betrachteten imaginären Quellknotens.

5. Verfahren nach Anspruch 4, wobei, wenn M<N-K ist, K durch eine angepasste Anzahl K_{adj} gleich mit N-M ersetzt wird, wobei die Anzahl von imaginären Quellknoten K_{adj}-K ist.

6. Verfahren nach einem der Ansprüche 1 bis 5, wobei der Schritt eines Erstellens der Erzeugungsmatrix aufweist:
ein Löschen von bis zu h Positionen jeder Spalte der Erzeugungsmatrix, die sich von den Nullen enthaltenden Positionen unterscheiden, wobei h die Löschungskorrekturkapazität des primären Fehlerkorrekturcodes ist, wobei h gleich dem minimalen Hamming-Abstand des Codes minus 1 ist,
ein Einstellen (512, 513) von Werten gegebenenfalls für Koeffizienten entsprechend Positionen, die sich von denjenigen Positionen unterscheiden, die entweder Null-Koeffizienten oder Löschungen enthalten, und
ein Wiederherstellen der gelöschten Positionen durch Verknüpfen eines Codeworts des linearen Fehlerkorrekturcodes mit jeder Spalte, wobei die in dem Einstellschritt eingestellten Werte derartig sind, dass alle der Spalten der Erzeugungsmatrix linear unabhängig sind.

7. Verfahren nach Anspruch 6, wobei der Fehlerkorrekturcode ein Reed-Solomon-Code mit Größe N und Dimension K ist.

8. Verfahren nach einem der Ansprüche 1 bis 7, wobei der Schritt eines Bestimmens der Koeffizienten durch einen Knoten des Netzwerks durchgeführt wird.

9. Verfahren zum Kommunizieren von Datenpaketen über ein Netzwerk mit einem Satz von K Quellknoten und N Relaisknoten, wobei zumindest ein Relaisknoten Datenpakete von einem Unter-Satz des Satzes von K Quellknoten empfängt, wobei die Datenpakete aus Symbolen aus einem vorbestimmten Galois-Feld zusammengesetzt sind, **gekennzeichnet durch**:
einen Schritt eines Erhaltens (605) von gemäß einem der Ansprüche 1 bis 8 erzeugten Netzwerkcodierungskoeffizienten,
einen Schritt eines Zuordnens der mit jeder Zeile der Erzeugungsmatrix verknüpften Koeffizienten zu dessen entsprechenden Relaisknoten,
einen Schritt eines Linearnetzwerkcodierens **durch** lineares Kombinieren von von Quellknoten empfangenen Datenpaketen in dem Relaisknoten unter Verwendung der Koeffizienten, und
einen Schritt eines Sendens der resultierenden Linearkombination von dem Relaisknoten zu dem Zielknoten.

10. Verfahren zum Kommunizieren von Datenpaketen über ein Netzwerk mit einem Satz von K Quellknoten und N Relaisknoten, wobei zumindest ein Relaisknoten Datenpakete von einem Unter-Satz des Satzes von K Quellknoten empfängt, wobei die Datenpakete aus Symbolen aus einem vorbestimmten Galois-Feld zusammengesetzt sind, **gekennzeichnet durch**:
einen Schritt eines Erhaltens von gemäß einem der Ansprüche 1 bis 8 erzeugten Netzwerkcodierungskoeffizienten,
einen Schritt eines Empfangens zumindest einer von Linearkombinationen von Datenpaketen von Quellknoten (753), wobei die Linearkombination Koeffizienten bei Positionen der Erzeugungsmatrix verwendet, die einem Quellknoten und einem Relaisknoten entsprechen, zwischen denen eine Verbindung besteht, und
einen Schritt eines Wiederherstellens von Daten wie **durch** die Quellknoten gesendet **durch** Lösen eines Lineargleichungssystems (760), das aus den empfangenen Linearkombinationen zusammengesetzt ist.

11. Verfahren nach einem der Ansprüche 9 oder 10, wobei ein Relaisknoten, der einen fehlerhaften oder fehlenden Datenempfang von einem mit diesem verbundenen Quellknoten erfasst, eine Benachrichtigung an den Zielknoten sendet, was es dem Zielknoten ermöglicht, die fehlende oder fehlerhafte Linearkombination von dem Relaisknoten als Löschung zu markieren.

12. Vorrichtung (310) zur Erzeugung von Netzwerkcodierungskoeffizienten, die in einem Netzwerk zu verteilen sind, das einen Satz von K Quellknoten (101, 102, 103, 104) und N Relaisknoten (111, 112, 113, 114, 115, 116) aufweist, wobei zumindest ein Relaisknoten Datenpakete von einem Unter-Satz des Satzes von K Quellknoten empfängt, wobei die Datenpakete aus Symbolen aus einem vorbestimmten Galois-Feld zusammengesetzt sind, **gekennzeichnet durch**
eine Einrichtung (313) zur Bestimmung von Netzwerkverbindungen zwischen den K Quellknoten und den N Relaisknoten,
eine Einrichtung (313) zur Erstellung einer Erzeugungsmatrix für einen linearen Fehlerkorrekturcode, einer Erzeugungsmatrix, einer Dimension N*K mit Koeffizienten aus dem Galois-Feld, die derart definiert ist, dass jede Zeile der Erzeugungsmatrix einem Relaisknoten entspricht und jede Spalte der Erzeugungsmatrix einem Quellknoten entspricht, und derart, dass bei jeder Position in der Erzeugungsmatrix, die einem Quellknoten und einem Relaisknoten entspricht, zwischen denen keine Verbindung besteht, der Koeffizient ein Null-Koeffizient ist, und
eine Einrichtung (313) zur Bestimmung der Koeffizienten bei Positionen der Erzeugungsmatrix, die einem Quellknoten und einem Relaisknoten entsprechen, zwischen denen eine Verbindung besteht, so dass jede der Spalten einem Codewort des linearen Fehlerkorrekturcodes entspricht, und dass die jeweils den Spalten entsprechenden Codewörter alle linear unabhängig sind, wobei die Koeffizienten jeder der Zeilen durch den Relaisknoten entsprechend der betreffenden Zeile für lineare Netzwerkcodierung **durch** lineare Kombination von von Quellknoten empfangenen Datenpaketen verwendet werden.

13. Vorrichtung zur Kommunikation von Datenpaketen über ein Netzwerk mit einem Satz von K Quellknoten und N Relaisknoten, wobei zumindest ein Relaisknoten Datenpakete von einem Unter-Satz des Satzes von K Quellknoten empfängt, wobei die Datenpakete aus Symbolen aus einem vorbestimmten Galois-Feld zusammengesetzt sind, **gekennzeichnet durch**:
eine Einrichtung zum Erhalten von **durch** eine Vorrichtung gemäß Anspruch 12 erzeugten Netzwerkcodierungskoeffizienten,
eine Einrichtung zum Empfang zumindest einer von Linearkombinationen von Datenpaketen von Quellknoten, wobei die Linearkombination Koeffizienten bei Positionen der Erzeugungsmatrix verwendet, die einem Quellknoten und einem Relaisknoten entsprechen, zwischen denen eine Verbindung besteht, und
eine Einrichtung zur Wiederherstellung von Daten wie **durch** die Quellknoten gesendet **durch** Lösen eines Lineargleichungssystems, das aus den empfangenen Linearkombinationen zusammengesetzt ist.

14. In ein Computersystem ladbares Computerprogramm, wobei das Programm Anweisungen enthält, die die Implementierung des Verfahrens gemäß einem der Ansprüche 1 bis 11 ermöglicht, wenn das Programm durch ein Computersystem geladen und ausgeführt wird.

15. Durch einen Computer oder einen Mikroprozessor lesbarer Informationsträger, der Anweisungen eines Computerprogramms gemäß Anspruch 14 speichert.

## Revendications

1. Procédé pour générer des coefficients de codage de réseau devant être distribués dans un réseau comprenant un ensemble de K noeuds sources et N noeuds relais, au moins un noeud relais recevant des paquets de données en provenance d'un sous-ensemble dudit ensemble de K noeuds sources, les paquets de données étant composés de symboles d'un Corps de Galois prédéterminé, **caractérisé en ce qu'**il comprend les étapes consistant à :
- déterminer (503, 702) des liaisons de réseau entre les K noeuds sources et les N noeuds relais ;
- construire (507, 703) une matrice génératrice pour un code de correction d'erreur linéaire, de dimension N*K, avec des coefficients dudit Corps de Galois, définis de sorte que chaque ligne de la matrice génératrice corresponde à un noeud relais et chaque colonne de la matrice génératrice corresponde à un noeud source, et de sorte qu' à chaque position dans la matrice génératrice qui correspond à un noeud source et un noeud relais entre lesquels aucune liaison n'existe ledit coefficient soit un coefficient zéro, et
- déterminer (511, 512, 513) les coefficients au niveau de positions de la matrice génératrice qui correspondent à un noeud source et un noeud relais entre lesquels une liaison existe de sorte que chaque dite colonne corresponde à un mot de code dudit code de correction d'erreur linéaire et que les mots de code correspondant respectivement aux colonnes soient tous indépendants linéairement, les coefficients de chaque dite ligne étant utilisés par le noeud relais correspondant à la ligne concernée pour le codage de réseau linéaire en combinant linéairement des paquets de données reçus de noeuds sources.

2. Procédé selon la revendication 1, dans lequel l'étape consistant à construire ladite matrice génératrice comprend la détermination du nombre K de noeuds sources (501), la détermination du nombre N de noeuds relais (502), le rassemblement des informations sur les liaisons existant dans le réseau entre les noeuds sources et les noeuds relais (503) et la détermination de si chaque sous-ensemble non vide de l'ensemble de K noeuds sources est connecté à au moins N-K+c noeuds relais, où c avec 0<c≤K est la cardinalité dudit sous-ensemble.

3. Procédé selon la revendication 2, dans lequel l'étape consistant à construire ladite matrice génératrice comprend les étapes consistant à :
- pour chaque sous-ensemble non vide de l'ensemble de K noeuds sources, calculer la différence entre la cardinalité de l'ensemble de noeuds relais connectés à au moins un des noeuds sources dans ledit sous-ensemble et la cardinalité dudit sous-ensemble ;
- déterminer le minimum M desdites différences et
- déterminer (504) qu'une matrice génératrice existe si M = N-K.

4. Procédé selon l'une ou l'autre des revendications 2 ou 3, dans lequel, si au moins un sous-ensemble avec la cardinalité c, avec 0<c≤K, de l'ensemble de K noeuds sources est connecté à moins de N-K+c noeuds relais, au cours de l'étape de détermination desdits coefficients, le réseau est augmenté virtuellement (505) en ajoutant au moins un noeud source imaginaire considéré comme étant connecté à chaque noeud relais.

5. Procédé selon la revendication 4, dans lequel, si M<N-K, K est remplacé par un nombre ajusté K_{adj} égal à N-M, le nombre de noeuds sources imaginaires étant K_{adj}-K.

6. Procédé selon l'une quelconque des revendications 1 à 5, dans lequel l'étape consistant à construire ladite matrice génératrice comprend :
- l'effacement de jusqu'à h positions de chaque colonne de la matrice génératrice qui diffèrent des positions contenant des zéros, où h est la capacité de correction d'effacement du code de correction d'erreur primaire, h étant égal à la distance de Hamming minimum dudit code moins 1 ;
- l'établissement de valeurs (512, 513) pour des coefficients correspondant à des positions qui diffèrent de ces positions contenant soit des coefficients zéro soit des effacements, s'il y en a ; et
- la récupération des positions effacées en associant à chaque colonne un mot de code du code de correction d'erreur linéaire, où les valeurs établies à l'étape d'établissement sont telles que toutes les colonnes de la matrice génératrice sont indépendantes linéairement.

7. Procédé selon la revendication 6, dans lequel le code de correction d'erreur est un code de Reed-Solomon de taille N et de dimension K.

8. Procédé selon l'une quelconque des revendications 1 à 7, dans lequel l'étape consistant à déterminer lesdits coefficients est effectuée par un noeud du réseau.

9. Procédé pour communiquer des paquets de données sur un réseau comprenant un ensemble de K noeuds sources et N noeuds relais, au moins un noeud relais recevant des paquets de données en provenance d'un sous-ensemble dudit ensemble de K noeuds sources, les paquets de données étant composés de symboles d'un Corps de Galois prédéterminé, **caractérisé en ce qu'**il comprend :
- une étape d'obtention de coefficients de codage de réseau (605) générés selon l'une quelconque des revendications 1 à 8,
- une étape d'affectation des coefficients associés à chaque ligne de la matrice génératrice à son noeud relais correspondant,
- une étape de codage de réseau linéaire en combinant linéairement, dans ledit noeud relais, des paquets de données reçus de noeuds sources en utilisant lesdits coefficients et
- une étape d'envoi de la combinaison linéaire résultante dudit noeud relais au noeud de destination.

10. Procédé pour communiquer des paquets de données sur un réseau comprenant un ensemble de K noeuds sources et N noeuds relais, au moins un noeud relais recevant des paquets de données en provenance d'un sous-ensemble dudit ensemble de K noeuds sources, les paquets de données étant composés de symboles d'un Corps de Galois prédéterminé, **caractérisé en ce qu'**il comprend :
- une étape d'obtention de coefficients de codage de réseau générés selon l'une quelconque des revendications 1 à 8,
- une étape de réception d'au moins une des combinaisons linéaires de paquets de données en provenance de noeuds sources (753), ladite combinaison linéaire utilisant des coefficients au niveau de positions de la matrice génératrice qui correspondent à un noeud source et un noeud relais entre lesquels une liaison existe et
- une étape de récupération de données telles qu'envoyées par les noeuds sources, en résolvant un système d'équation linéaire (760) composé des combinaisons linéaires reçues.

11. Procédé selon l'une ou l'autre des revendications 9 ou 10, dans lequel un noeud relais détectant une réception de données erronées ou manquantes en provenance d'un noeud source connecté à celui-ci envoie une notification au noeud de destination, permettant au noeud de destination de marquer la combinaison linéaire manquante ou erronée en provenance du noeud relais comme effacement.

12. Dispositif (310) pour générer des coefficients de codage de réseau devant être distribués dans un réseau comprenant un ensemble de K noeuds sources (101, 102, 103, 104) et N noeuds relais (111, 112, 113, 114, 115, 116), au moins un noeud relais recevant des paquets de données en provenance d'un sous-ensemble dudit ensemble de K noeuds sources, les paquets de données étant composés de symboles d'un Corps de Galois prédéterminé, **caractérisé en ce qu'**il comprend :
- un moyen (313) pour déterminer des liaisons de réseau entre les K noeuds sources et les N noeuds relais ;
- un moyen (313) pour construire une matrice génératrice pour un code de correction d'erreur linéaire, une matrice génératrice, de dimension N*K, avec des coefficients dudit Corps de Galois, définis de sorte que chaque ligne de la matrice génératrice corresponde à un noeud relais et chaque colonne de la matrice génératrice corresponde à un noeud source, et de sorte qu'à chaque position dans la matrice génératrice qui correspond à un noeud source et un noeud relais entre lesquels aucune liaison n'existe ledit coefficient soit un coefficient zéro, et
- un moyen (313) pour déterminer les coefficients au niveau de positions de la matrice génératrice qui correspondent à un noeud source et un noeud relais entre lesquels une liaison existe de sorte que chaque dite colonne corresponde à un mot de code dudit code de correction d'erreur linéaire et les mots de code correspondant respectivement aux colonnes soient tous indépendants linéairement, les coefficients de chaque dite ligne étant utilisés par le noeud relais correspondant à la ligne concernée pour le codage de réseau linéaire en combinant linéairement des paquets de données reçus de noeuds sources.

13. Dispositif pour communiquer des paquets de données sur un réseau comprenant un ensemble de K noeuds sources et N noeuds relais, au moins un noeud relais recevant des paquets de données en provenance d'un sous-ensemble dudit ensemble de K noeuds sources, les paquets de données étant composés de symboles d'un Corps de Galois prédéterminé, **caractérisé en ce qu'**il comprend :
- des moyens pour obtenir des coefficients de codage de réseau générés par un dispositif selon la revendication 12,
- des moyens pour recevoir au moins une des combinaisons linéaires de paquets de données en provenance de noeuds sources, ladite combinaison linéaire utilisant des coefficients au niveau de positions de la matrice génératrice qui correspondent à un noeud source et un noeud relais entre lesquels une liaison existe et
- des moyens pour récupérer des données telles qu'envoyées par les noeuds sources, en résolvant un système d'équation linéaire composé des combinaisons linéaires reçues.

14. Programme informatique chargeable dans un système informatique, ledit programme contenant des instructions permettant la mise en oeuvre du procédé selon l'une quelconque des revendications 1 à 11, lorsque ce programme est chargé et exécuté par un système informatique.

15. Support d'informations lisible par un ordinateur ou un microprocesseur stockant des instructions d'un programme informatique, selon la revendication 14.
